# EUROPEAN PATENT SPECIFICATION

(11) **EP 3 962 166 B1**
(45) Date of publication and mention of the grant of the patent: **25.02.2026**
(21) Application number: 20794168.3
(22) Date of filing: 15.04.2020
(51) Int. Cl.: H04W 36/06, H04W 36/36, H04W 36/00, H04W 36/32

(54) **FAST HANDOVER FOR NON-TERRESTRIAL NETWORK HAVING A CU-DU CONFIGURATION**
SCHNELLER HANDOVER FÜR EIN NICHT-TERRESTRISCHES NETZWERK MIT EINER CU-DU-KONFIGURATION
TRANSFERT RAPIDE POUR RÉSEAU NON TERRESTRE AVEC CONFIGURATION CU-DU

(30) Priority: 22.04.2019 CN 201910323103
(43) Date of publication of application: 02.03.2022
(73) Proprietor: Sony Group Corporation, Tokyo 108-0075 (JP)
(72) Inventor: LI, Kai, Shanghai Institute of Microsystem and Information Technology, Chinese Academy of Sciences 865 Changning Road Beijing 200050 (CN); LIU, Min, Beijing 100028 (CN); WANG, Huajun, Shanghai 200050 (CN)
(74) Representative: D Young & Co LLP
(86) International application number: PCT/CN2020/084810
(87) International publication number: WO 2020/216105

(56) References cited:
- CN-A- 108 112 281
- CN-A- 108 924 894
- CN-A- 109 565 721
- US-A1- 2017 289 822
- CATT: "Considerations on NTN mobility", vol. RAN WG3, no. Athens, Greece; 20190225 - 20190301, 15 February 2019 (2019-02-15), pages 1 - 6, XP051604185, Retrieved from the Internet <URL:http://www.3gpp.org/ftp/tsg%5Fran/WG3%5FIu/TSGR3%5F103/Docs/R3%2D190242%2Ezip> [retrieved on 20190215]
- CMCC: "Utilization of beam footprint information for mobility management", vol. RAN WG2, no. Xi'an, China; 20190408 - 20190412, 6 April 2019 (2019-04-06), XP051704477, Retrieved from the Internet <URL:http://www.3gpp.org/ftp/Meetings%5F3GPP%5FSYNC/RAN2/Docs/R2%2D1904318%2Ezip> [retrieved on 20190406]
- NOKIA ET AL: "Analysis on CONNECTED mode mobility in Scenario D2", vol. RAN WG3, no. Athens, Greece; 20190225 - 20190301, 16 February 2019 (2019-02-16), XP051604392, Retrieved from the Internet <URL:http://www.3gpp.org/ftp/tsg%5Fran/WG3%5FIu/TSGR3%5F103/Docs/R3%2D190451%2Ezip> [retrieved on 20190216]
- ERICSSON: "Connected mode mobility aspects for NTN GEO", vol. RAN WG2, no. Xian, China; 20190408 - 20190412, 6 April 2019 (2019-04-06), XP051700915, Retrieved from the Internet <URL:http://www.3gpp.org/ftp/Meetings%5F3GPP%5FSYNC/RAN2/Docs/R2%2D1903573%2Ezip> [retrieved on 20190406]
- NOKIA ET AL: "Analysis on mobilitry due to interface change", vol. RAN WG3, no. Xi'an, China; 20190408 - 20190412, 6 April 2019 (2019-04-06), XP051702819, Retrieved from the Internet <URL:http://www.3gpp.org/ftp/Meetings%5F3GPP%5FSYNC/RAN3/Docs/R3%2D191545%2Ezip> [retrieved on 20190406]
- ERICSSON: "Mobility for NTN LEO", vol. RAN WG2, no. Xian, China; 20190408 - 20190412, 6 April 2019 (2019-04-06), XP051700917, Retrieved from the Internet <URL:http://www.3gpp.org/ftp/Meetings%5F3GPP%5FSYNC/RAN2/Docs/R2%2D1903575%2Ezip> [retrieved on 20190406]
- "3rd Generation Partnership Project; Technical Specification Group Radio Access Network; Solutions for NR to support non-terrestrial networks (NTN) (Release 16)", 3GPP STANDARD; TECHNICAL REPORT; 3GPP TR 38.821, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.4.0, 11 April 2019 (2019-04-11), pages 1 - 46, XP051723405
- NOKIA ET AL.,: "Analysis on CONNECTED mode mobility in Scenario D2,", 3GPP TSG-RAN WG3 #103, R3-190451, 1 March 2019 (2019-03-01), XP051604392, DOI: 20200703134945Y

## Description

### FIELD

The embodiments of the present disclosure generally relate to the field of wireless communication, and in particular to a Centralized Unit equipment, a user equipment, a wireless communication method and a computer readable storage medium. More particularly, the present disclosure relates to a Centralized Unit equipment in a wireless communication system, a user equipment in a wireless communication system, a wireless communication method performed by a Centralized Unit equipment in a wireless communication system, a wireless communication method performed by a user equipment in a wireless communication system, and a computer readable storage medium.

### BACKGROUND

In a wireless communication system including a TN (Terrestrial network), a gNB-Centralized Unit (CU) plays a role as an information center and a management unit in a service coverage of a gNB. The gNB-CU is responsible for exchanging control information with a user equipment in the service coverage of the gNB. A gNB-Distributed Unit (DU) is responsible for exchanging data information with the user equipment in the service coverage of the gNB. The gNB-CU and the gNB-DU are integrated in the gNB, such that the gNB communicates with the user equipment.

In the above wireless communication system, both the CU and the DU are integrated in the gNB. In a wireless communication system where a CU equipment and a DU equipment are separated from each other, there may be a case where the user equipment is required to switch from a DU equipment serving the user equipment to a new DU equipment, and a case where the DU equipment is required to switch from a CU equipment serving the DU equipment to a new CU equipment. Therefore, in the wireless communication system in which a CU equipment is separated from a DU equipment, how to rapidly switch a user equipment to an appropriate DU equipment and/or how to rapidly switch a DU equipment to an appropriate CU equipment is a technical problem required to be solved urgently.

Therefore, it is necessary to provide a technical solution to rapidly switch a user equipment to an appropriate DU equipment, and rapidly switch a DU equipment to an appropriate CU equipment.

### Prior Art Includes:

CATT: "Considerations on NTN mobility", 3GPP DRAFT; R3-190242, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX, FRANCE. This prior art disclosure describes a prior art device.

### SUMMARY

The summary part provides a general summary of the present disclosure, rather than a comprehensive disclosure of a full scope or all features of the present disclosure.

An object of the present disclosure is to provide a Centralized Unit equipment and a wireless communication method to switch the user equipment to an appropriate DU equipment and switch the DU equipment to an appropriate CU equipment rapidly. The invention is defined by the appended independent claims.

Embodiments of the present disclosure are defined by the appended claims.

With the Centralized Unit equipment and the wireless communication method according to the present disclosure, the CU equipment generates switching configuration information for switching from a source DU equipment to a target DU equipment and transmits the switching configuration information to the user equipment. The switching configuration information includes one or more candidate target DU equipments. That is, the target DU equipment to which the user equipment is to switch can be predicted before the user equipment switches from the source DU equipment to the target DU equipment, so that the user equipment can switch to the target DU equipment by using the switching configuration information, thereby realizing fast switching. Similarly, the CU equipment may further generate switching configuration information for switching from the CU equipment to the target CU equipment and transmit the switching configuration information to the source DU equipment. The switching configuration information includes the target CU equipment. That is, the target CU equipment to which the source DU equipment is to switch can be predicted before the source DU equipment switches from the CU equipment to the target CU equipment, so that the source DU equipment can switch to the target CU equipment by using the switching configuration information, thereby realizing fast switching.

A further applicable field becomes apparent from the description herein. The description and specific examples in the summary are only illustrative and are not intended to limit the scope of the present disclosure.

### BRIEF DESCRIPTION OF THE DRAWINGS

The drawings described herein are used for illustrating the selected embodiments only rather than all of possible embodiments, and are not intended to limit the scope of the present disclosure. In the drawings:
Figure 1 is a schematic diagram showing comparison between an architecture of a non-terrestrial network and an architecture of a terrestrial network according to an embodiment of the present disclosure;
Figure 2 (a) is a schematic diagram showing arrangement of a CU equipment on a geosynchronous orbit satellite according to an embodiment of the present disclosure;
Figure 2 (b) is a schematic diagram showing arrangement of a CU equipment on a terrestrial base station device according to an embodiment of the present disclosure;
Figure 3 is a block diagram showing a configuration example of a CU equipment according to an embodiment of the present disclosure;
Figure 4 is a signaling flowchart showing a process of predicting an optional target DU equipment by a CU equipment according to an embodiment of the present disclosure;
Figure 5 is a signaling flowchart showing a process of predicting an optional target DU equipment by a user equipment according to an embodiment of the present disclosure;
Figure 6 is a signaling flowchart showing a process of switching from a source DU equipment to a target DU equipment by a user equipment according to an embodiment of the present disclosure;
Figure 7 is a signaling flowchart showing a process of switching from a source DU equipment to a target DU equipment by a user equipment according to another embodiment of the present disclosure;
Figure 8 is a signaling flowchart showing a process of switching a user equipment served by a source DU equipment to a corresponding target DU equipment and switching the source DU equipment to a target CU equipment according to an embodiment of the present disclosure;
Figure 9 is a signaling flowchart of step S804 in Figure 8 according to an embodiment of the present disclosure;
Figure 10 is a signaling flowchart of step S804 in Figure 8 according to another embodiment of the present disclosure;
Figure 11 is a signaling flowchart of step S806 in Figure 8 according to an embodiment of the present disclosure;
Figure 12 is a block diagram showing a configuration example of a user equipment according to an embodiment of the present disclosure;
Figure 13 is a flowchart of a wireless communication method performed by a CU equipment according to an embodiment of the present disclosure;
Figure 14 is a flowchart of a wireless communication method performed by a user equipment according to an embodiment of the present disclosure;
Figure 15 is a block diagram showing a first exemplary configuration of an Evolved Node B (eNB);
Figure 16 is a block diagram showing a second exemplary configuration of the eNB;
Figure 17 is a block diagram showing an exemplary configuration of a smartphone; and
Figure 18 is a block diagram showing an exemplary configuration of a vehicle navigation device.

Although the present disclosure is susceptible to various modifications and substitutions, specific embodiments thereof are shown in the drawings as examples and are described in detail herein. However, it should be understood that the description of specific embodiments herein is not intended to limit the present disclosure into a disclosed specific form. It should be noted that, corresponding reference numerals indicate corresponding components throughout the drawings.

### DETAILED DESCRIPTION OF EMBODIMENTS

Now, examples of the present disclosure are described more fully with reference to the drawings. The following description is merely illustrative in nature and is not intended to limit the present disclosure and application or use.

Exemplary embodiments are provided so that the present disclosure can become exhaustive and the scope of the present disclosure can be fully conveyed to those skilled in the art. Examples of various specific details such as specific components, apparatuses, and methods are set forth to provide detailed understanding of the embodiments of the present disclosure. It is apparent to those skilled in the art that without specific details, the exemplary embodiments may be implemented in multiple different forms, none of which is construed as limiting the scope of the present disclosure. In some exemplary embodiments, well-known processes, well-known structures, and well-known technologies are not described in detail.

The present disclosure is described in the following order:
1. Description of Scenario
2. Configuration Example of Centralized Unit equipment
3. Configuration Example of User Equipment
4. Method Embodiment
5. Application Example

### <1. Description of Scenario>

As mentioned above, in a wireless communication systems where a CU equipment is separated from a DU equipment, there may be a case where a user equipment is required to switch to a new DU equipment, and a case where a DU equipment is required to switch to a new CU equipment. A Centralized Unit equipment, a user equipment, a wireless communication method and a computer-readable storage medium are desired to be provided according to the present disclosure to rapidly switch the user equipment to an appropriate DU equipment, and rapidly switch the DU equipment to an appropriate CU equipment.

According to the embodiments of the present disclosure, the wireless communication system may be a fifth generation (5G) or sixth generation (6G) communication system. The wireless communication system provided in the present disclosure may be a satellite communication system including a non-terrestrial network (NTN). The satellite communication system may include multiple CU equipments, multiple DU equipments and multiple user equipments.

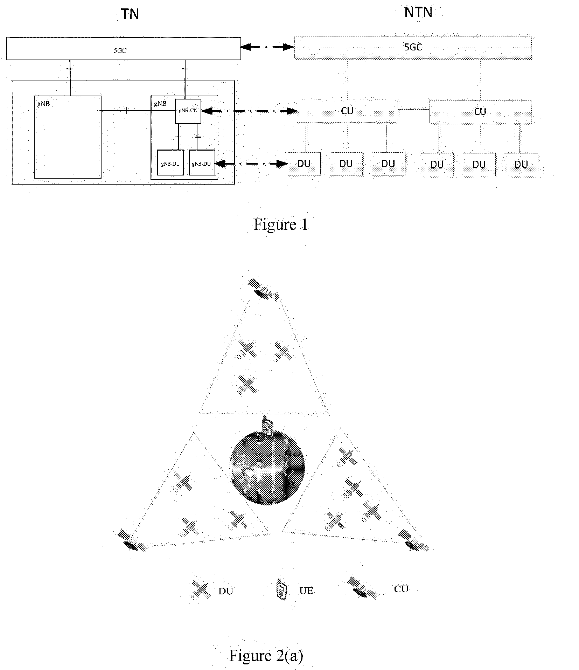

Figure 1 is a schematic diagram showing comparison between an architecture of a non-terrestrial network and an architecture of a terrestrial network according to an embodiment of the present disclosure. A schematic diagram of the architecture of the TN is shown on a left part of Figure 1, and a schematic diagram of the architecture of the NTN is shown on a right part of Figure 1, where 5GC represents a core network of a 5G network. As shown in Figure 1, in the TN network, gNB includes one gNB-CU and multiple gNB-DUs. The gNB-CU is responsible for control information transmission with the user equipment. The gNB-DU is responsible for data information transmission with the user equipment. In addition, the gNB-CU may further manage a resource of each gNB-DU.

Furthermore, according to an embodiment of the present disclosure, multiple CU equipments and multiple DU equipments are provided in the NTN network, as shown in Figure 1. The CU equipment is responsible for control information transmission with the user equipment. The DU equipment is responsible for data information transmission with the user equipment. In addition, each CU equipment may manage resources of multiple DU equipments. Here, the CU equipment and the DU equipment may be separated from each other, that is, respectively arranged in devices that are separated from each other.

The Distributed Unit (DU) equipment according to the present disclosure may be a satellite device in a satellite communication system. The DU equipment may be a Low Earth Orbit (LEO) satellite device, a Medium Earth Orbit (MEO) satellite device, a Highly Elliptical Orbiting (HEO) satellite device and High Altitude Platform Station (HAPS).

The Centralized Unit (CU) equipment according to the present disclosure may be a satellite device in the satellite communication system. The CU equipment may be a Geosynchronous Orbit (GEO) satellite device. The GEO satellite device is stationary relative to a user equipment and a base station device on ground, and has the smallest Doppler shift effect among all types of satellite device. In addition, the GEO satellite device has a relative large coverage, facilitating information collection. Therefore, the GEO satellite device is suitable as a CU equipment.

The CU equipment according to the present disclosure may also be a terrestrial base station device in the satellite communication system, such as an eNB, or a gNB (a base station in a fifth generation communication system). A delay between the terrestrial base station device and the user equipment is small, and the terrestrial base station device is close to a 5G core network. Therefore, the terrestrial base station device may also serve as a CU equipment.

In addition, according to an embodiment of the present disclosure, the CU equipment may be arranged according to geographical location, that is, one CU equipment that is activated may be arranged in each predetermined area, where the predetermined area may be referred to as a service coverage of the activated CU equipment. Optionally, the predetermined area may further include one or more CU equipments (standby CU equipment) that are not activated. For example, in a case where the CU equipment that is activated breaks down, one of the standby CU equipment may be activated. Furthermore, a service coverage of a CU equipment that is activated may be a space service coverage, in which multiple DU equipments and multiple user equipments are included. The space service coverage may also be referred to as a Visual satellite cell (VSC).

Figure 2 (a) is a schematic diagram showing arrangement of a CU equipment on a geosynchronous orbit satellite according to an embodiment of the present disclosure. As shown in Figure 2 (a), a satellite communication system may include multiple CU equipments, multiple DU equipments and multiple UEs. Each of the CU equipments is a GEO satellite device. Each of the DU equipments is a LEO satellite device, a MEO satellite device, a HEO satellite device or a HAPS. Figure 2 (a) shows a service coverage of each of the CU equipments with a dotted box. Each of the CU equipments may manage a DU equipment and a UE that are in a service coverage of the CU equipment.

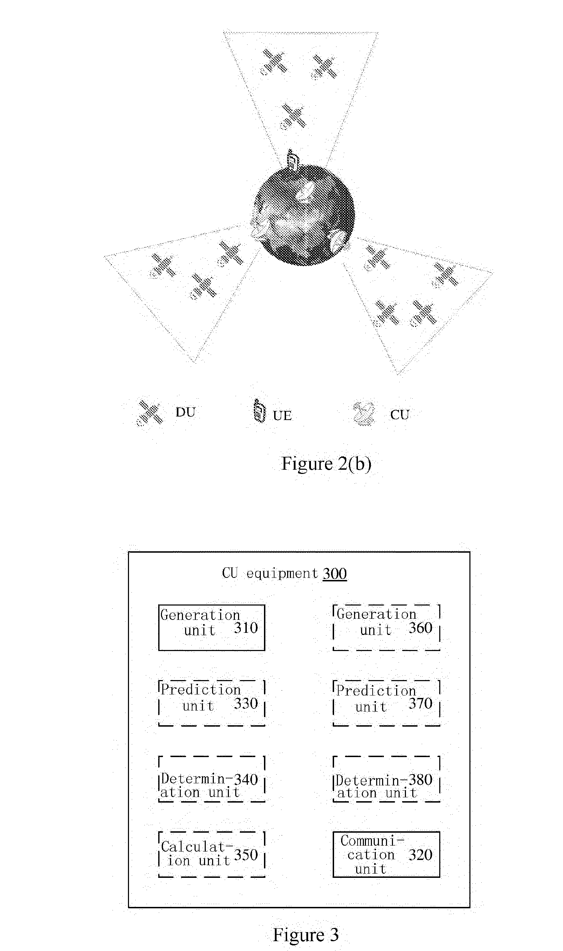

Figure 2 (b) is a schematic diagram showing arrangement of a CU equipment on a terrestrial base station device according to an embodiment of the present disclosure. As shown in Figure 2 (b), a satellite communication system may include multiple CU equipments, multiple DU equipments, and multiple UEs. Each of the CU equipments is a terrestrial base station device. Each of the DU equipments is a LEO satellite device or a MEO satellite device, a HEO satellite device or a HAPS. Figure 2 (b) shows a space service coverage of each of the CU equipment with a dotted box. Each of the CU equipments may manage a DU equipment and a UE that are in a service coverage of the CU equipment.

The user equipment (UE) according to the present disclosure may be a mobile terminal (such as a smartphone, a tablet personal computer (PC), a notebook PC, a portable game terminal, a portable/dongle mobile router and a digital camera) or a vehicle terminal (such as a vehicle navigation device). The user equipment may further be implemented as a terminal performing machine to machine (M2M) communication (which is also referred to as a machine type communication (MTC) terminal). In addition, the user equipment may further be a wireless communication module (such as an integrated circuit module including a single wafer) mounted on each of the above terminals.

### <2. Configuration Example of Centralized Unit equipment>

Figure 3 is a block diagram showing a configuration example of a CU equipment 300 according to an embodiment of the present disclosure.

As shown in Figure 3, the CU equipment 300 may include a generation unit 310 and a communication unit 320.

Here, units of the CU equipment 300 may be included in a processing circuit. It should be noted that the CU equipment 300 may include one processing circuit or multiple processing circuits. Further, the processing circuit may include various discrete functional units to perform various functions and/or operations. It should be noted that these functional units may be physical entities or logical entities, and units with different names may be implemented by one physical entity.

According to the embodiments of the present disclosure, the generation unit 310 may generate switching configuration information for a user equipment to switch from a source DU equipment to a target DU equipment. The switching configuration information includes one or more candidate target DU equipments of the user equipment.

Here, the user equipment may be within a service coverage of the CU equipment 300. The user equipment is served by the source DU equipment and desires to switch to a new DU equipment.

According to the embodiments of the present disclosure, the communication unit 320 may be configured to receive information from an equipment other than the CU equipment 300 and/or transmit information to an equipment other than the CU equipment 300. Here, the CU equipment 300 may transmit switching configuration information to the user equipment through the communication unit 320.

As described above, according to the embodiments of the present disclosure, the CU equipment 300 may generate switching configuration information for switching from the source DU equipment to the target DU equipment and transmit the switching configuration information to the user equipment. The switching configuration information includes one or more candidate target DU equipments. That is, the target DU equipment to which the user equipment is to switch can be predicted before the user equipment switches from the source DU equipment to the target DU equipment, so that the user equipment can switch to the target DU equipment by using the switching configuration information, thereby realizing fast switching.

In the present disclosure, the DU equipment may be a satellite device, so that the DU equipment is moving all the time. In other words, the DU equipment moves relative to the user equipment. In a case where the DU equipment is an LEO satellite device, a time period for the satellite device covering a point on the ground may be only a few minutes, so that the user equipment is required to frequently switch a DU equipment serving the user equipment. Apparently, the above description is only one case in which the user equipment is required to switch the DU equipment serving the user equipment, and a condition for the user equipment to switch from the source DU equipment to the target DU equipment is not limited in the present disclosure. That is, the condition for the user equipment to switch the DU equipment is similar to a condition for the user equipment to switch a base station device serving the user equipment in conventional technology. For example, in a case where quality of a link between the user equipment and the DU equipment serving the user equipment degrades, the user equipment may switch from the source DU equipment to the target DU equipment. In a case where the user equipment moves outside the service coverage of the DU equipment serving user equipment, the user equipment may switch from the source DU equipment to the target DU equipment. In a case where movement of the DU equipment serving the user equipment results in that the DU equipment cannot serve the user equipment, the user equipment may switch from the source DU equipment to the target DU equipment.

According to the embodiments of the present disclosure, the switching configuration information generated by the generation unit 310 may include one or more candidate target DU equipments, for example, the switching configuration information includes identification information of the one or more candidate target DU equipments.

According to the embodiments of the present disclosure, the switching configuration information generated by the generation unit 310 may further include priority information of one or more candidate target DU equipments of the user equipment. Here the generation unit 310 may represent the priority information in any manner known in the art. For example, the switching configuration information may include identification information and priority information of the one or more candidate target DU equipments. For another example, the priority information may also be represented using an order of the one or more candidate target DU equipments. In an embodiment, the one or more candidate target DU equipments are ranked and transmitted in a descending order of priority.

According to the embodiments of the present disclosure, the CU equipment 300 may further transmit the switching configuration information to the source DU equipment serving the user equipment through the communication unit 320, for the source DU equipment to establish a communication link with each of the one or more candidate target DU equipments.

According to the embodiments of the present disclosure, the switching configuration information transmitted by the CU equipment 300 to the source DU equipment may be the same as the switching configuration information transmitted to the user equipment. The CU equipment 300 may transmit switching configuration information only including identification information of the one or more candidate target DU equipments to the source DU equipment.

According to the embodiments of the present disclosure, after establishing a communication link with each of the one or more candidate target DU equipments, the source DU equipment may transmit buffer data not completely transmitted between the source DU equipment and the user equipment to each candidate target DU equipment. In this way, preparations are made for subsequent switching process, so that the user equipment can rapidly switch to the target DU equipment after a switching condition is met.

According to the embodiments of the present disclosure, as shown in Figure 3, the CU equipment 300 may further include a determination unit 340. The determination unit 340 is configured to determine a candidate target DU equipment of the user equipment according to the optional target DU equipment of the user equipment. Here, the optional target DU equipment of the user equipment may be a predicted DU equipment where a possibility of the user equipment switching to the predicted DU equipment is high. The DU equipment may be predicted by the CU equipment 300 or the user equipment.

An embodiment of the CU equipment 300 predicting the optional target DU equipment of the user equipment is described in detail below.

According to the embodiments of the present disclosure, as shown in Figure 3, the CU equipment 300 may further include a prediction unit 330 configured to predict the optional target DU equipment of the user equipment. Further, the prediction unit 330 may determine the optional target DU equipment of the user equipment according to at least one of the following information: position information of the user equipment, speed information of the user equipment, link quality information between the user equipment and each DU equipment within a service coverage of the CU equipment 300, and ephemeris information of each DU equipment within the service coverage of the CU equipment 300.

According to the embodiments of the present disclosure, the CU equipment 300 may receive a measurement report from the user equipment through the communication unit 320. The measurement report includes link quality information between the user equipment and each DU equipment within the service coverage of the CU equipment 300. Further, the CU equipment 300 may further receive position information and/or speed information of the user equipment from the user equipment through the communication unit 320. Here, the user equipment may transmit the position information and/or the speed information while transmitting the measurement report. Alternatively, the user equipment may transmit the measurement report and the position information and/or the speed information at different time. In addition, the CU equipment 300 may further periodically receive ephemeris information from each DU equipment within the service coverage of the CU equipment 300 through the communication unit 320. In this way, the prediction unit 330 obtains at least one of the following information: the position information of the user equipment, the speed information of the user equipment, the link quality information between the user equipment and each DU equipment within the service coverage of the CU equipment 300, and the ephemeris information of each DU equipment within the service coverage of the CU equipment 300.

According to the embodiments of the present disclosure, the prediction unit 330 may determine a distance between the user equipment and each DU equipment at a switching time instant according to at least one of the following information and determine the optional target DU equipment of the user equipment according to the distance between the user equipment and each DU equipment: position information of the user equipment, speed information of the user equipment, and ephemeris information of each DU equipment within the service coverage of the CU equipment 300. For example, the prediction unit 330 may determine one or more DU equipments that are close to the user equipment at the switching time instant as the optional DU equipment. The prediction unit 330 may further determine the optional target DU equipment of the user equipment according to the distance between the user equipment and each DU equipment and link quality between the user equipment and each DU equipment. For example, the prediction unit 330 may determine a DU equipment that is close to the user equipment and has good link quality at the switching time instant as the optional DU equipment. That is, the prediction unit 330 may predict a DU equipment around the user equipment (optionally, having good link quality) at the switching time instant, that is, a DU equipment where a possibility of switching to the DU equipment is high as the optional DU equipment.

According to the embodiments of the present disclosure, as shown in Figure 3, the CU equipment 300 may further include a calculation unit 350 configured to calculate a Doppler frequency shift value between each optional target DU equipment and the user equipment. Here the calculation unit 350 may calculate the Doppler frequency shift value between the DU equipment and the user equipment in any manner known in the art, which is not limited in the present disclosure. Further, the switching configuration information generated by the generation unit 310 may further include a Doppler frequency shift value between each candidate target DU equipment and the user equipment, for the user equipment to perform Doppler compensation on the link between the target DU equipment and the user equipment after the user equipment switches to the target DU equipment in the candidate target DU equipment.

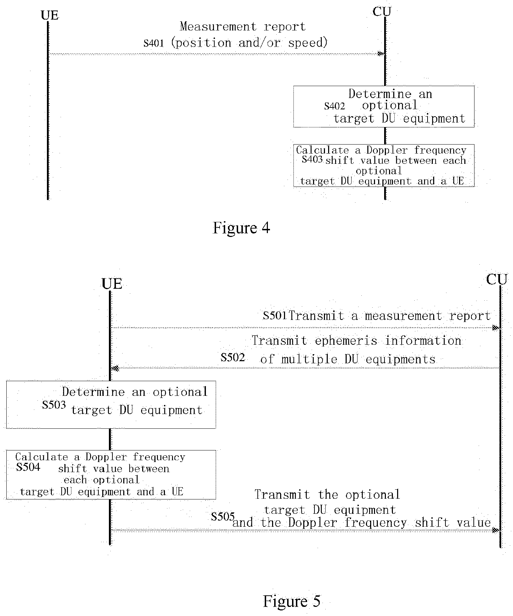

Figure 4 is a signaling flowchart showing a CU equipment predicting an optional target DU equipment according to an embodiment of the present disclosure. In Figure 4, the CU may be implemented as the CU equipment 300, and UE represents a user equipment within a service coverage of the CU. As shown in Figure 4, in step S401, the UE transmits a measurement report to the CU, and the measurement report may further include position information of the UE. Optionally, the measurement report may further include speed information of the UE. Next, in step S402, the CU determines an optional target DU equipment of the UE. Next, in step S403, the CU calculates a Doppler frequency shift value between each optional target DU equipment and the UE. In this way, the CU determines the optional target DU equipment of the UE.

As described above, the CU equipment 300 according to the embodiments of the present disclosure can predict the optional target DU equipment to which the user equipment may switch. The CU equipment 300 knows the ephemeris information of each DU equipment within the service coverage of the CU equipment 300, so that the CU equipment 300 can perform prediction only by obtaining the position information (optionally, and speed information) of the user equipment, which is simple and easy. In addition, before switching, the optional target DU equipment is predicted and the candidate target DU equipment is determined according to the optional target DU equipment to generate switching configuration information, so that fast switching of the user equipment can be realized.

An embodiment of the user equipment predicting the optional target DU equipment of the user equipment is described in detail below.

According to the embodiments of the present disclosure, the CU equipment 300 may receive a measurement report from the user equipment through the communication unit 320. The measurement report includes link quality information between the user equipment and each DU equipment within the service coverage of the CU equipment.

Further, the CU equipment 300 may transmit ephemeris information of multiple DU equipments with link quality higher than a predetermined threshold to the user equipment through the communication unit 320, for the user equipment to determine the optional target DU equipment of the user equipment. According to the embodiments of the present disclosure, the measurement report received from the user equipment may further include information representing that the user equipment desires to predict the optional target DU equipment of the user equipment. For example, the information may be represented by 1 bit, so that the CU equipment 300 may transmit the ephemeris information of the multiple DU equipments to the user equipment in response to the information representing that the user equipment desires to predict the optional target DU equipment.

Here, the process of the user equipment determining the optional target DU equipment is similar to the process of the prediction unit 330 determining the optional target DU equipment. For example, the user equipment may determine the optional target DU equipment of the user equipment according to at least one of the following information: position information of the user equipment, speed information of the user equipment, and ephemeris information of multiple DU equipments with link quality higher than a predetermined threshold where the ephemeris information is received from the CU equipment 300. For example, the user equipment may determine a distance between the user equipment and each of the multiple DU equipments with link quality higher than a predetermined threshold at the switching time instant, so as to determine a DU equipment close to the user equipment as the optional DU equipment. Here, the user equipment selects the optional target DU equipment from the multiple DU equipments with link quality higher than the predetermined threshold, link quality of the selected optional target DU equipment must be good.

According to the embodiments of the present disclosure, due to large amount of the ephemeris information, the CU equipment 300 only transmits the ephemeris information of the multiple DU equipments with link quality higher than the predetermined threshold to the user equipment. In this way, information that the CU equipment is required to transmit can be reduced, and difficulty and time for the user equipment to select the optional target DU equipment can be reduced.

According to the embodiments of the present disclosure, the CU equipment 300 may receive the optional target DU equipment of the user equipment from the user equipment through the communication unit 300. Here the CU equipment 300 may receive identification (ID) information of the optional target DU equipment of the user equipment from the user equipment. Further, the CU equipment 300 may further receive a Doppler frequency shift value between each optional target DU equipment and the user equipment from the user equipment through the communication unit 300.

Figure 5 is a signaling flowchart showing a user equipment predicting an optional target DU equipment according to an embodiment of the present disclosure. In Figure 5, the CU may be implemented by the CU equipment 300, and the UE represents a user equipment within the service coverage of the CU. As shown in Figure 5, in step S501, the UE transmits a measurement report to the CU. The measurement report may further include information representing that the UE desires to predict the optional target DU equipment. Next, in step S502, the CU transmits ephemeris information of multiple DU equipments to the UE. Next, in step S503, the UE determines the optional target DU equipment of the UE. Next, in step S504, the UE calculates a Doppler frequency shift value between each optional target DU equipment and the UE. Next, in step S505, the UE transmits the optional target DU equipment and the Doppler frequency shift value between each optional target DU equipment and the UE to the CU. In this way, the CU obtains the optional target DU equipment of the UE.

As described above, the CU equipment 300 according to the embodiments of the present disclosure obtains the optional target DU equipment of the UE from the UE. In addition, before switching, the optional target DU equipment is predicted and the candidate target DU equipment is determined according to the optional target DU equipment to generate switching configuration information, so that fast switching of the user equipment can be realized.

According to the embodiments of the present disclosure, after the prediction unit 330 of the CU equipment 300 predicts the optional target DU equipment or the CU equipment 300 obtains the optional target DU equipment from the user equipment, the determination unit 340 may determine the candidate target DU equipment according to the optional target DU equipment.

According to the embodiments of the present disclosure, the CU equipment 300 may transmit switching request information to each optional target DU equipment through the communication unit 320 and receive switching response information representing whether the user equipment is allowed to access from the optional target DU equipment. Here, the optional target DU equipment may determine whether to allow the user equipment to access according to a load condition of the optional target DU equipment and generate switching response information. For example, the optional target DU equipment may transmit switching response information carrying ACK information to the CU equipment 300 only in a case where the user equipment is allowed to access, and transmit no switching response information in other cases. In this case, the CU equipment 300 may set a timer, it is determined that the user equipment is not allowed to access the optional target DU equipment in a case where no switching response information is received from the optional target DU equipment when the timer expires. As another example, the optional target DU equipment may transmit switching response information carrying ACK information to the CU equipment 300 in a case where the user equipment is allowed to access, and transmit switching response information carrying NACK information to the CU equipment 300 in a case where the user equipment is not allowed to access. In this case, it may be determined that the user equipment is allowed to access the optional target DU equipment when the CU equipment 300 receives the switching response information carrying ACK information, and it may be determined that the user equipment is not allowed to access the optional target DU equipment when the CU equipment 300 receives the switching response information carrying NACK information.

According to the embodiments of the present disclosure, the determination unit 340 may determine the candidate target DU equipment of the user equipment according to the optional target DU equipment to which the user equipment is allowed to access. For example, the determination unit 340 may select a predetermined number (preferably three) of optional target DU equipments from the optional target DU equipment to which the user equipment is allowed to access as the candidate target DU equipment. In this way, amount of the switching configuration information can be reduced, thereby reducing a signaling overhead of the CU equipment 300.

According to the embodiments of the present disclosure, the determination unit 340 may further select the candidate target DU equipment of the user equipment from the optional target DU equipments to which the user equipment is allowed to access according to link quality information between the user equipment and each of the optional target DU equipments to which the user equipment is allowed to access as the candidate target DU equipment. For example, the determination unit 340 may select a predetermined number (preferably three) of optional target DU equipments with good link quality from the optional target DU equipment to which the user equipment is allowed to access as the candidate target DU equipment. In this case, the determination unit 340 may further determine priority of the selected candidate target DU equipment according to link quality information between the user equipment and each of the optional target DU equipment to which the user equipment is allowed to access. For example, good link quality represents high priority.

According to the embodiments of the present disclosure, the determination unit 340 may further select the candidate target DU equipment of the user equipment from the optional target DU equipment to which the user equipment is allowed to access according to load information of the optional target DU equipment to which the user equipment is allowed to access. For example, the determination unit 340 may select a predetermined number of (preferably three) optional target DU equipment with a light load from the optional target DU equipment to which the user equipment is allowed to access as the candidate target DU equipment. In this case, the determination unit 340 may further determine priority of the selected candidate target DU equipment according to load information of the optional target DU equipment to which the user equipment is allowed to access. For example, a light load represents a high priority.

According to the embodiments of the present disclosure, the determination unit 340 may further select the candidate target DU equipment of the user equipment from the optional target DU equipment to which the user equipment is allowed to access according to link quality information between the user equipment and each of the optional target DU equipment to which the user equipment is allowed to access and the load information of the optional target DU equipment to which the user equipment is allowed to access. For example, the determination unit 340 may select a predetermined number (preferably, three) of optional target DU equipment with good link quality and a light load from the optional target DU equipment to which the user equipment is allowed to access as the candidate target DU equipment. In this case, the determination unit 340 may further determine priority of the selected candidate target DU equipment according to the link quality information between the user equipment and each of the optional target DU equipment to which the user equipment is allowed to access and the load information of the optional target DU equipment to which the user equipment is allowed to access. For example, good link quality and a light load represent a high priority.

In this way, the determination unit 340 may determine the candidate target DU equipment of the user equipment according to the optional target DU equipment of the user equipment. Here, the optional target DU equipment represents a DU equipment to which the user equipment is most likely to switch at the switching time instant, and the candidate target DU equipment represents a DU equipment in the optional target DU equipment which the user equipment is allowed to access. Further, the determination unit 340 may further filtrate the DU equipment to which the user equipment is allowed to access to determine a final candidate target DU equipment.

According to the embodiments of the present disclosure, the CU equipment 300 may further transmit, to each optional target DU equipment through the communication unit 320, a Doppler frequency shift value between the optional target DU equipment and the user equipment, for the target DU equipment in the optional target DU equipment (that is, the DU equipment to which the user eventually switches) to perform Doppler compensation on the link between the target DU equipment and the user equipment after the user equipment switches to the target DU equipment.

According to the embodiments of the present disclosure, the CU equipment 300 may further transmit switching duration information to each optional target DU equipment through the communication unit 320 to request the optional target DU equipment to reserve a resource for the user equipment within the switching duration. For any one of the optional target DU equipment, in a case where no user equipment access to the optional target DU equipment within the switching duration, the optional target DU equipment may release the reserved resource to avoid waste of resource.

Here, the CU equipment 300 may transmit the Doppler frequency shift value and/or the switching duration information while transmitting the switching request to each optional target DU equipment. Alternatively, the CU equipment 300 may transmit the Doppler frequency shift value and/or the switching duration information and the switching request at different times.

As described above, according to the embodiments of the present disclosure, the CU equipment 300 may determine the candidate target DU equipment from the optional target DU equipment and may transmit the switching configuration information including the candidate target DU equipment to the user equipment. Preferably, the switching configuration information may further include priority information of the candidate target DU equipment. Preferably, in the case where the CU equipment 300 predicts the optional target DU equipment and calculates the Doppler frequency shift value, the switching configuration information may further include the Doppler frequency shift value between each candidate target DU equipment and the user equipment.

Therefore, an example of the switching configuration information includes, but is not limited to the following examples.

| | Content of the switching configuration information | Example of the switching configuration information |
|---|---|---|
| 1 | Candidate target DU equipment | ID1, ID2, ID3, ... |
| 2 | Candidate target DU equipment (priority is implicitly indicated by sequence) | ID1, ID2, ID3, ...(priority is in a descending order) |
| 3 | Candidate target DU equipment + priority | ID1, priority1; ID2, priority2; ID3, priority3; ... |
| 4 | Candidate target DU equipment + Doppler frequency shift value | ID1, frequency shift value 1; ID2, frequency shift value 2; ID3, frequency shift value 3... |
| 5 | Candidate target DU equipment (priority is implicitly indicated by sequence) + Doppler frequency shift value | ID1, frequency shift value 1; ID2, frequency shift value 2; ID3, frequency shift value 3... (priority is in a descending order) |
| 6 | Candidate target DU equipment + priority + Doppler frequency shift value | ID1, priority 1, frequency shift value 1; ID2, priority2, frequency shift value 2; ID3, priority3, frequency shift value 3; ... |

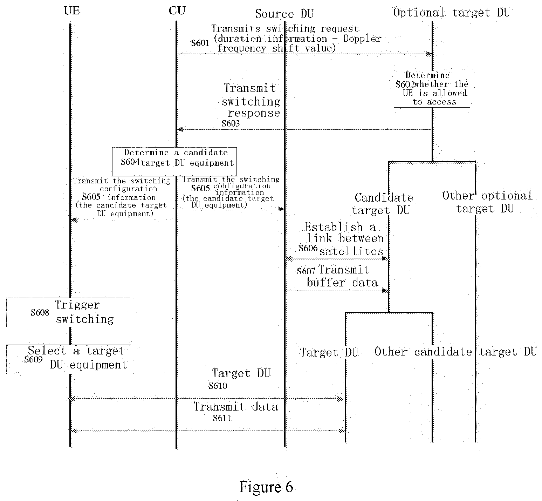

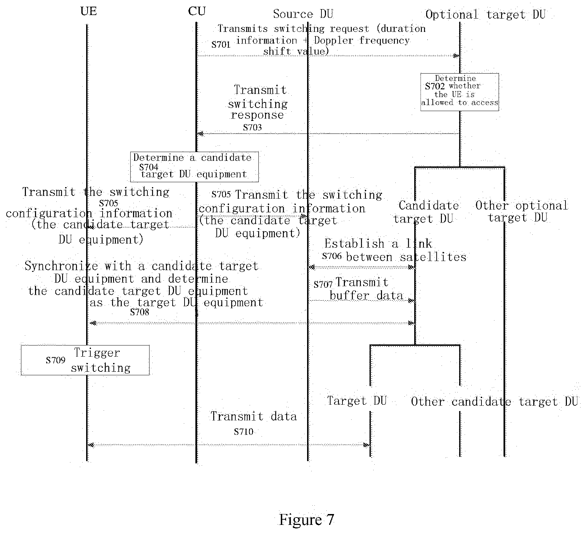

Figures 6 and 7 are signaling flowcharts each showing a user equipment switching from a source DU equipment to a target DU equipment according to an embodiment of the present disclosure. In Figures 6 and 7, the CU may be implemented by the CU equipment 300, and the UE may be within a service coverage of the CU. In addition, the UE is originally served by the source DU and desires to switch to a new DU equipment. Here, in Figures 6 and 7, the CU has predicted or obtained an optional target DU equipment of the UE (for example, through the process shown in Figure 4 or Figure 5).

As shown in Figure 6, in step S601, the CU transmits switching request information to each of the optional target DU equipment. Alternatively, the CU may further transmit switching duration information and/or a Doppler frequency shift value to the optional target DU equipment. Next, in step S602, each optional target DU equipment determines whether the UE is allowed to access the DU equipment. Next, in step S603, the optional target DU equipment transmits switching response information to the CU. Here, the switching response information may not be transmitted in a case where the UE is not allowed to access the optional target DU equipment. Next, in step S604, the CU determines the candidate target DU equipment from the optional target DU equipment to which the UE is allowed to access. Next, in step S605, the CU generates switching configuration information of the UE and transmits the switching configuration information to the UE and the source DU equipment. The switching configuration information includes at least identification information of the candidate target DU equipment. Next, in step S606, the source DU equipment establishes a link between satellites with each candidate target DU equipment after receiving the switching configuration information. In step S607, the source DU equipment transmits buffer data to each candidate target DU equipment. Next, in step S608, the UE determines that the switching condition is met, so that switching is triggered. Next, in step S609, the UE selects a candidate target DU equipment from one or more candidate target DU equipments as the target DU equipment to which the UE eventually switches to. Next, in step S610, the UE synchronizes with the target DU equipment. Next, in step S611, the UE switches to the target DU equipment, and data is transmitted. In this way, the UE switches from the source DU equipment to the target DU equipment.

As shown in Figure 7, in step S701, the CU transmits switching request information to each of the optional target DU equipment. Optionally, the CU may further transmit switching duration information and/or a Doppler frequency shift value to the optional target DU equipment. Next, in step S702, each optional target DU equipment determines whether the UE is allowed to access the optional target DU equipment. Next, in step S703, the optional target DU equipment transmits switching response information to the CU. Here, the switching response information may not be transmitted in a case where the UE is not allowed to access the optional target DU equipment. Next, in step S704, the CU determines a candidate target DU equipment from the optional target DU equipment to which the UE is allowed to access. Next, in step S705, the CU generates switching configuration information of the UE and transmits the switching configuration information to the UE and the source DU equipment. The switching configuration information includes at least identification information of the candidate target DU equipment. Next, in step S706, the source DU equipment establishes a link between satellites with each candidate target DU equipment after receiving the switching configuration information. In step S707, the source DU equipment transmits buffer data to each candidate target DU equipment. Next, in step S708, the UE may attempt to synchronize with each candidate target DU equipment sequentially (for example, in a descending order of priority) until the UE successfully synchronizes with a candidate target DU equipment, and the candidate target DU equipment is determined as the target DU equipment. Next, in step S709, the UE determines that the switching condition is met, so that switching is triggered. Next, in step S710, the UE switches to the target DU equipment, and data is transmitted. In this way, the UE switches from the source DU equipment to the target DU equipment.

As described above, in the embodiment shown in Figure 6, after the switching is triggered, the UE selects the target DU equipment from the one or more candidate target DU equipments, synchronizes with the selected target DU equipment, and switches from the source DU equipment to the target DU equipment. In the embodiment shown in Figure 7, the UE selects the target DU equipment from the one or more candidate target DU equipments and synchronizes with the selected target DU equipment. For example, the UE may attempt to synchronize with each candidate target DU equipment sequentially (for example, in a descending order of priority) until the UE successfully synchronizes with a candidate target DU equipment, and the candidate target DU equipment is determined as the target DU equipment. After the switching is triggered, the UE switches from the source DU equipment to the target DU equipment. In this case, connection between the UE and the source DU equipment is not broken when the UE completes synchronization with the target DU equipment, so that the UE is in a multi-connected state. In this way, after the switching is triggered, the UE can directly communicate with the target DU equipment, thereby realizing seamless switching. That is, if the UE has ability of multi-connection, the process shown in Figure 7 is performed. If the UE has no ability of multi-connection, the process shown in Figure 6 is performed.

As described above, according to the embodiments of the present disclosure, the CU equipment 300 may transmit switching configuration information to the UE, so as to assist the UE in switching from the source DU equipment to the target DU equipment rapidly.

As described above, the DU equipment may be a satellite device, so that the DU equipment is in motion. In other words, the DU equipment moves relative to the user equipment. Especially for a case where the DU equipment is a LEO satellite device, a time period of the satellite device covering a point on the ground may be only a few minutes, so that the user equipment is required to frequently switch the DU equipment serving the user equipment. In this case, the source CU equipment serving the DU equipment may no longer be suitable to serve the DU equipment due to the motion of the DU equipment, so that the DU equipment is required to switch to a new CU equipment, which is described in detail below.

According to the embodiments of the present disclosure, as shown in Figure 3, the CU equipment 300 may further include a generation unit 360 configured to generate switching configuration information for the source DU equipment to switch from the CU equipment 300 to the target CU equipment. The switching configuration information of the source DU equipment includes the target CU equipment of the source DU equipment. Further, the CU equipment 300 may transmit the switching configuration information of the source DU equipment to the source DU equipment through the communication unit 320.

As described above, according to the embodiments of the present disclosure, the CU equipment 300 may generate the switching configuration information for the source DU equipment to switch from the CU equipment 300 to the target CU equipment and transmit the switching configuration information to the source DU equipment. In this way, the source DU equipment can switch from the CU equipment 300 to the target CU equipment according to the switching configuration information. Therefore, the target CU equipment to which the source DU equipment is to switch can be predicted before the source DU equipment switches from the CU equipment 300 to the target CU equipment, thereby realizing fast switching. In addition, the source DU equipment is only required to periodically report ephemeris information without measuring, so that the resource and signaling overhead of the source DU equipment can be saved.

According to the embodiments of the present disclosure, as shown in Figure 3, the CU equipment 300 further includes a prediction unit 370 configured to determine one or more candidate target CU equipments of the source DU equipment according to the ephemeris information of the source DU equipment and the position information of a CU equipment around the source DU equipment. Here, the candidate target CU equipment is a CU equipment predicted by the prediction unit 370 where the source DU equipment is likely to switch to the predicted CU equipment.

According to the embodiments of the present disclosure, the prediction unit 370 may further determine a switching time instant when the source DU equipment switches and one or more candidate target CU equipments at the switching time instant according to the ephemeris information of the source DU equipment and the position information of the CU equipments around the source DU equipments.

Here, the CU equipment 300 may periodically obtain ephemeris information from the source DU equipment through the communication unit 320. Further, in a case where the CU equipment around the source DU equipment is a satellite device, the CU equipment 300 may obtain ephemeris information from the CU equipment around the source DU equipment through the communication unit 320, so as to obtain the position information (optionally, speed information) of the CU equipment around the source DU equipment. In a case where the CU equipment around the source DU equipment is a terrestrial base station device, the CU equipment 300 may obtain position information of the CU equipment around the source DU equipment from the CU equipment around the source DU equipment through the communication unit 320. In this way, the prediction unit 370 obtains at least one of the following information: the position information of the source DU equipment, the speed information of the source DU equipment, the position information of the CU equipment around the source DU equipment, and the speed information of the CU equipment around the source DU equipment.

According to the embodiments of the present disclosure, the prediction unit 370 may determine a distance between the source DU equipment and each CU equipment at each time instant according to at least one of the following information and determine a time instant when the source DU equipment is required to switch and a candidate target CU equipment of the source DU equipment at each switching time instant according to the distance between the source DU equipment and each CU equipment at the time instant: position information of the source DU equipment, speed information of the source DU equipment, position information of the CU equipment around the source DU equipment, and speed information of the CU equipment around the source DU equipment. For example, the prediction unit 370 may determine a CU equipment that is close to the source DU equipment at the switching time instant as the candidate target CU equipment.

According to the embodiments of the present disclosure, as shown in Figure 3, the CU equipment 300 may further include a determination unit 380 configured to determine a target CU equipment of the source DU equipment according to one or more candidate target CU equipments of the source DU equipment. Here, the candidate target CU equipment represents a CU equipment that is close to the source DU equipment at the switching time instant, that is, a CU equipment to which the source DU equipment is most likely to switch. The target CU equipment represents a CU equipment in the candidate target CU equipment where the source DU equipment is allowed to access the CU equipment.

According to the embodiments of the present disclosure, the CU equipment 300 may transmit switching request information to each of the one or more candidate target CU equipments through the communication unit 320, and receive switching response information representing whether the source DU equipment is allowed to access from the candidate target CU equipment. Here, the candidate target CU equipment may determine whether to allow the source DU equipment to access according to a load condition of the candidate target CU equipment and generate switching response information. For example, the candidate target CU equipment may transmit switching response information carrying ACK information to the CU equipment 300 only in a case where the source DU equipment is allowed to access, and transmit no switching response information in other cases. In this case, the CU equipment 300 may set a timer. It is determined that the source DU equipment is not allowed to access the candidate target CU equipment in a case where no switching response information is received from the candidate target CU equipment when the timer expires. As another example, the candidate target CU equipment may transmit switching response information carrying ACK information to the CU equipment 300 in a case where the source DU equipment is allowed to access, and transmit switching response information carrying NACK information to the CU equipment 300 in a case where the source DU equipment is not allowed to access. In this case, it may be determined that the source DU equipment is allowed to access the candidate target CU equipment when the CU equipment 300 receives the switching response information carrying ACK information, and it may be determined that the source DU equipment is not allowed to access the candidate target CU equipment when the CU equipment 300 receives the switching response information carrying NACK information.

According to the embodiments of the present disclosure, the determination unit 380 may determine the target CU equipment of the source DU equipment according to the candidate target CU equipment to which the source DU equipment is allowed to access. For example, the determination unit 380 may further select a target CU equipment from the candidate target CU equipment to which the source DU equipment is allowed to access according to load information of the candidate target CU equipment to which the source DU equipment is allowed to access. For example, the determination unit 380 may select a candidate target CU equipment with the lightest load from the candidate target CU equipment to which the source DU equipment is allowed to access as the target CU equipment.

According to the embodiments of the present disclosure, the CU equipment 300 may transmit buffer data about the source DU equipment to the target CU equipment through the communication unit 320. In this way, the target CU equipment establishes a link with the source DU equipment to transmit data after receiving the buffer data.

As described above, according to the embodiments of the present disclosure, the CU equipment 300 may assist a DU equipment within a service coverage of the CU equipment 300 in switching to a new CU equipment, thereby realizing fast switching. Here, before the DU equipment switches to the new CU equipment, the user equipment served by the DU equipment is required to switch from the DU equipment to a new DU equipment, and this process may be performed through assistance of the CU equipment 300. Embodiments in which the CU equipment 300 assists the user equipment in switching to the target DU equipment are described in detail above, and the embodiments are not repeated herein. Embodiments different from the embodiments described above are described below.

According to the embodiments of the present disclosure, the CU equipment 300 may transmit a forced switching instruction representing that each user equipment served by the source DU equipment is required to be switched to a target DU equipment to the source DU equipment through the communication unit 320. For example, the CU equipment 300 may transmit the forced switching instruction to the source DU equipment before the switching time instant of the source DU equipment arrives. After receiving the forced switching instruction, the source DU equipment may generate measurement configuration information for each user equipment to trigger the user equipment to measure link quality between the user equipment and each DU equipment.

According to the embodiments of the present disclosure, the CU equipment 300 may transmit, to each user equipment served by the source DU equipment, switching configuration information of the user equipment. The CU equipment 300 may also transmit the switching configuration information of each user equipment served by the source DU equipment to the source DU equipment, for the source DU equipment to transmit the switching configuration information of each user equipment to the user equipment. Here, the generation unit 310 of the CU equipment 300 is required to generate switching configuration information for each user equipment served by the source DU equipment, the source DU equipment may transmit the switching configuration information of each user equipment.

According to the embodiments of the present disclosure, the switching configuration information of each user equipment served by the source DU equipment generated by the generation unit 310 further includes effective time of the user equipment switching from the source DU equipment to the target DU equipment. The effective time represents maximum time for the user equipment to complete the switching. After the effective time, the source DU equipment is to switch to the new CU equipment, so that the user equipment cannot receive information from the CU equipment 300/transmit information to the CU equipment 300 through the source DU equipment. Therefore, the source DU equipment performs switching only by directly communicating with the CU equipment 300.

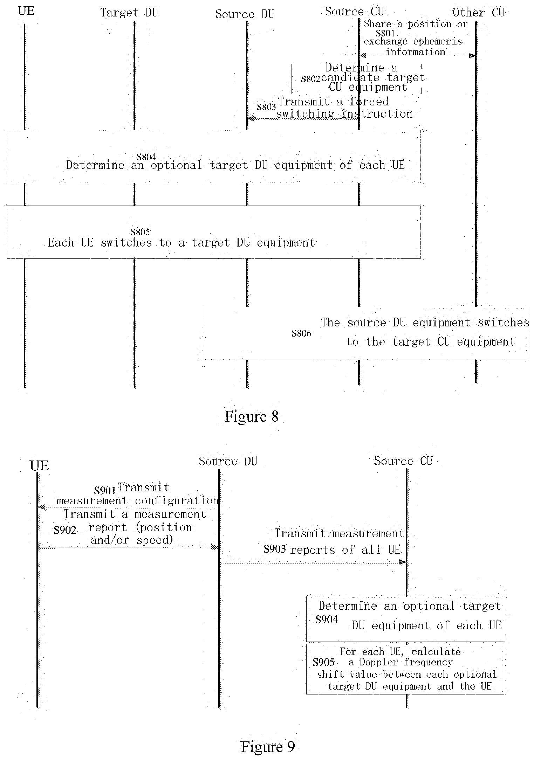

Figure 8 is a signaling flowchart showing switching a user equipment served by a source DU equipment to a target DU equipment and switching the source DU equipment to a target CU equipment according to an embodiment of the present disclosure. In Figure 8, the source CU may be implemented by the CU equipment 300. The UE served by the source DU equipment desires to switch from the source DU equipment to the target DU equipment. The source CU equipment desires to switch from the source CU equipment to the target CU equipment. As shown in Figure 8, in step S801, the source CU equipment shares a position or exchanges ephemeris information with other CU equipment around the source DU equipment, so as to obtain position information (and optionally speed information) of other CU equipment. Next, in step S802, the source CU equipment determines the switching time instant of the source DU equipment and the candidate target CU equipment of the source DU equipment at the switching time instant. Next, in step S803, before the switching time instant, the source CU equipment transmits a forced switching instruction to the source DU equipment for all UE served by the source DU equipment to switch to a target DU equipment. Next, in step S804, an optional target DU equipment for each UE is predicted. Next, in step S805, a candidate target DU equipment for each UE is determined and a target DU equipment is selected from the candidate target DU equipment, so as to switch each UE to a target DU equipment. Next, in step S806, the source DU equipment switches to the target CU equipment. In this way, each UE served by the source DU equipment switches to a corresponding target DU equipment, and the source DU equipment switches to the target CU equipment.

Figure 9 is a signaling flowchart of step S804 in Figure 8 according to an embodiment of the present disclosure. As shown in Figure 9, in step S901, the source DU equipment transmits measurement configuration information to each UE served by the source DU equipment. Next, in step S902, each UE transmits a measurement report to the source DU equipment. The measurement report includes position information of the UE and optionally includes speed information of the UE. Next, in step S903, the source DU transmits measurement reports of all UE served by the source DU to the source CU equipment together. Next, in step S904, the source CU equipment determines an optional target DU equipment for each UE. Next, in step S905, for each UE, the source CU equipment calculates a Doppler frequency shift value between each optional target DU equipment and the UE. In this way, the source CU equipment determines the optional target DU equipment for each UE. The signaling flowchart shown in Figure 9 corresponds to the signaling flowchart shown in Figure 4, except that in Figure 9 the source DU equipment collects measurement reports of all UE and transmits the measurement reports to the source CU equipment.

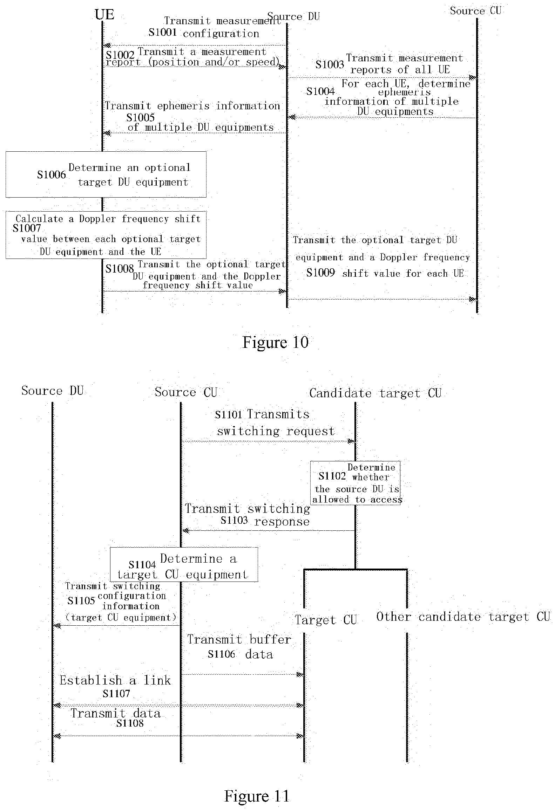

Figure 10 is a signaling flowchart of step S804 in Figure 8 according to another embodiment of the present disclosure. As shown in Figure 10, in step S1001, the source DU transmits measurement configuration information to each UE. Next, in step S1002, each UE transmits a measurement report to the source DU equipment. Next, in step S1003, the source DU transmits measurement reports of all UE served by the source DU to the source CU equipment. Next, in step S1004, for each UE, the source CU equipment determines multiple DU equipments to which the source CU equipment is required to transmit ephemeris information. For example, the source CU equipment selects multiple DU equipments with link quality higher than a predetermined threshold, and transmits the ephemeris information to the source DU equipment. Next, in step S1005, the source DU equipment transmits, to each UE, ephemeris information of multiple DU equipments for the UE. Next, in step S1006, each UE determines an optional target DU equipment. Next, in step S1007, each UE calculates a Doppler frequency shift value between each optional target DU equipment and the UE. Next, in step S1008, each UE transmits an optional target DU equipment determined by the UE and a Doppler frequency shift value corresponding to the UE to the source DU equipment. Next, in step S1009, the source DU equipment transmits an optional target DU equipment for each UE and a Doppler frequency shift value corresponding to the UE to the source CU equipment. In this way, the source CU equipment obtains the optional target DU equipment for each UE. The signaling flowchart shown in Figure 10 corresponds to the signaling flowchart shown in Figure 5 except for that in Figure 10 the source DU equipment collects measurement reports of all UE and transmits the measurement reports to the source CU equipment, the source CU equipment may transmit ephemeris information of multiple DU equipments for each UE to the source CU equipment for the source CU equipment to forward the ephemeris information, and the source DU equipment may collect and forward the optional target DU equipment and the Doppler frequency shift value of each UE.

It should be noted that Figures 9 and 10 show the process of step S804 in Figure 8 in an exemplary manner. Step S804 in Figure 8 may also be implemented in the manner shown in Figure 4 or Figure 5. In other words, the source CU equipment may predict or obtain the optional target DU equipment of each UE with the help of the source DU equipment. Alternatively, the source CU equipment may predict or obtain the optional target DU equipment of each UE by the source CU equipment directly communicating with the UE.

According to the embodiments of the present disclosure, the step S805 shown in Figure 8 may be implemented in the manner shown in Figure 6 or Figure 7, that is, the process of switching the UE to the target DU equipment may be realized as the embodiments described above, which is not repeated herein.

Figure 11 is a signaling flowchart of step S806 in Figure 8 according to an embodiment of the present disclosure. As shown in Figure 11, in step S1101, the source CU equipment transmits switching request information to each candidate target CU equipment. Next, in step S1102, each candidate target CU equipment determines whether to allow the source DU equipment access the candidate target CU equipment. Next, in step S1103, the candidate target CU equipment transmits a switching response message to the source CU equipment. Here, in a case where the source DU equipment is not allowed to access a candidate target CU equipment, the candidate target CU equipment may not transmit a switching response message to the source CU equipment. Next, in step S1104, the source CU equipment determines a target CU equipment according to a candidate target CU equipment to which the source DU equipment is allowed to access. Next, in step S1105, the source CU equipment transmits switching configuration information to the source DU equipment. The switching configuration information at least includes identification information of the target CU equipment. Next, in step S1106, the source CU equipment transmits buffer data to the target CU equipment. Next, in step S1107, the source DU equipment establishes a link with the target CU equipment. Next, in step S1108, data is transmitted normally between the source DU equipment and the target CU equipment. In this way, the source DU equipment switches from the source CU equipment to the target CU equipment.

As described above, according to the embodiments of the present disclosure, the CU equipment may generate the switching configuration information for switching from the source DU equipment to the target DU equipment and transmit the switching configuration information to the user equipment. The switching configuration information includes one or more candidate target DU equipments. That is, the target DU equipment to which the user equipment is to switch can be predicted before the user equipment switches from the source DU equipment to the target DU equipment, so that the user equipment can switch to the target DU equipment using the switching configuration information, thereby realizing fast switching. Similarly, the CU equipment may further generate switching configuration information for switching from the CU equipment to the target CU equipment and transmit the switching configuration information to the source DU equipment. The switching configuration information includes the target CU equipment. That is, the target CU equipment to which the source DU equipment is to switch can be predicted before the source DU equipment switches from the CU equipment to the target CU equipment, so that the source DU equipment can switch to the target CU equipment using the switching configuration information, thereby realizing fast switching. In other words, the CU equipment assists the user equipment in switching from the source DU equipment to the target DU equipment, and may further assist the DU equipment in switching to the target CU equipment.

### <3. Configuration Example of User Equipment>

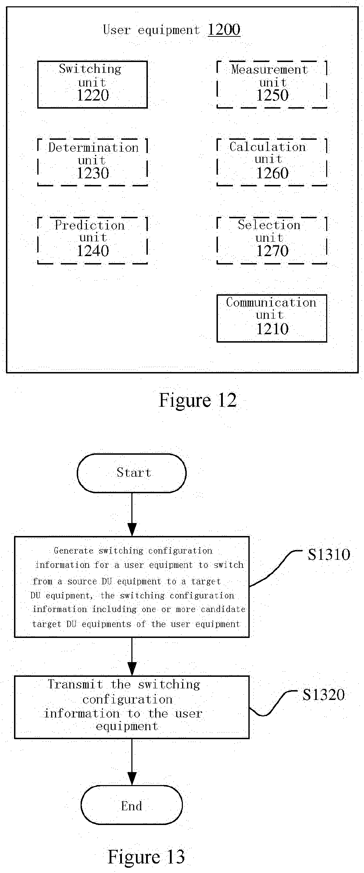

Figure 12 is a block diagram of a structure of a user equipment 1200 in a wireless communication system according to an embodiment of the present disclosure. As shown in Figure 12, the user equipment 1200 may include a communication unit 1210 and a switching unit 1220.

Here units of the user equipment 1200 may be included in processing circuitry. It should be noted that the user equipment 1200 may include one processing circuitry or multiple processing circuitry. Further, the processing circuitry may include various separate functional units to perform various functions and/or operations. It should be noted that these functional units may be physical entities or logical entities, and units with different names may be implemented by one physical entity.

According to the embodiments of the present disclosure, the user equipment 1200 may transmit information to an equipment other than the user equipment 1200 and/or receive information from an equipment other than the user equipment 1200 through the communication unit 1210. For example, the user equipment 1200 may receive switching configuration information from the CU equipment through the communication unit 1210. The switching configuration information includes one or more candidate target DU equipments of the user equipment 1200. Here the CU equipment may be a CU equipment serving the user equipment 1200, that is, the user equipment 1200 is within a service coverage of the CU equipment.

According to the embodiments of the present disclosure, the switching unit 1220 may switch from a source DU equipment to a target DU equipment according to the switching configuration information.

As described above, the user equipment 1200 according to the embodiments of the present disclosure may switch from the source DU equipment to the target DU equipment according to the switching configuration information received from the CU equipment. The switching configuration information includes one or more candidate target DU equipments. That is, the target DU equipment to which the user equipment 1200 may switch can be predicted before the user equipment 1200 switches from the source DU equipment to the target DU equipment, so that the user equipment 1200 can switch to the target DU equipment using the switching configuration information, thereby realizing fast switching.

According to the embodiments of the present disclosure, as shown in Figure 12, the user equipment 1200 may further include a determination unit 1230 configured to demodulate the received switching configuration information to determine information about one or more candidate target DU equipments. For example, the determination unit 1230 may determine identification information of each of the one or more candidate target DU equipments according to the switching configuration information so as to identify each candidate target DU equipment. Preferably, the determination unit 1230 may determine information of a predetermined number of candidate target DU equipments, for example, information of three candidate target DU equipments, according to the switching configuration information.

According to embodiments of the present disclosure, the determination unit 1230 may further determine priority of each of the one or more candidate target DU equipments according to the switching configuration information. Here the determination unit 1230 may determine priority of each candidate target DU equipment according to an order of the one or more candidate target DU equipments. For example, a candidate target DU equipment arranged in a front rank has high priority, and a candidate target DU equipment arranged in a later rank have low priority. Optionally, the determination unit 1230 may further determine the priority of each candidate target DU equipment according to priority information of each candidate target DU equipment included in the switching configuration information. According to the embodiments of the present disclosure, the priority information of each candidate target DU equipment represents evaluation of the candidate target DU equipment made by the CU equipment, that is, a high priority of a candidate target DU equipment represents that the DU equipment makes high evaluation of the candidate target DU equipment and that the user equipment 1200 is suggested to switch to the candidate target DU equipment.

According to the embodiments of the present disclosure, the determination unit 1230 may further determine a Doppler frequency shift value between each of the one or more candidate target DU equipments and the user equipment 1200 according to the switching configuration information. As described above, the CU equipment may determine the optional target DU equipment of the user equipment 1200 and determine the candidate target DU equipment according to the optional target DU equipment. In this case, the CU equipment may calculate the Doppler frequency shift value between each candidate target DU equipment and the user equipment 1200, so that the user equipment 1200 can obtain the Doppler frequency shift value between each candidate target DU equipment and the user equipment 1200 through the switching configuration information.

According to the embodiments of the present disclosure, as shown in Figure 12, the user equipment 1200 may further include a prediction unit 1240 configured to determine an optional target DU equipment of the user equipment 1200 according to at least one of the following information: position information of the user equipment 1200, speed information of the user equipment 1200, and ephemeris information of multiple DU equipments within a service coverage of the CU equipment.

According to the embodiments of the present disclosure, the user equipment 1200 may locate the user equipment 1200 and determine a speed of the user equipment 1200. Further, the user equipment 1200 may receive ephemeris information of multiple DU equipments from the CU equipment. Here, the multiple DU equipments may be some DU equipments with good link quality around the user equipment 1200.

According to the embodiments of the present disclosure, as shown in Figure 12, the user equipment 1200 may further include a measurement unit 1250 configured to measure link quality information between the user equipment 1200 and each DU equipment within the service coverage of the CU equipment. The link quality information may be expressed as Reference Signal Receiving Power (RSRP), Reference Signal Receiving Quality (RSRQ), Received Signal Strength Indication (RSSI) and the like, which is not limited in the present disclosure.

According to the embodiments of the present disclosure, the user equipment 1200 may transmit a measurement report to the CU equipment through the communication unit 1210. The measurement report includes link quality information between the user equipment 1200 and each DU equipment within the service coverage of the CU equipment. Then the user equipment 1200 receives ephemeris information of multiple DU equipments with link quality higher than a predetermined threshold from the CU equipment through the communication unit 1210. In this way, the user equipment 1200 obtains at least one of the following information to determine the optional target DU equipment of the user equipment 1200: the position information of the user equipment 1200, the speed information of the user equipment 1200, and the ephemeris information of multiple DU equipments within the service coverage of the CU equipment.

According to the embodiments of the present disclosure, in a case where the user equipment 1200 predicts the optional target DU equipment, the measurement report transmitted by the user equipment 1200 to the CU equipment may further include information representing that the user equipment 1200 desires to predict the optional target DU equipment. For example, the information may be represented by 1 bit to cause the CU equipment to transmit the ephemeris information of multiple DU equipments with link quality higher than a predetermined threshold in response to the information. Further, in the case where the CU equipment predicts the optional target DU equipment, the measurement report transmitted by the user equipment 1200 to the CU equipment may further include position information of the user equipment 1200 and optionally include speed information of the user equipment 1200, for the CU equipment to predict the optional target DU equipment of the user equipment 1200. Here, when reporting the speed information, the user equipment 1200 may determine, according to a coordinate system agreed with the CU equipment, for example, an Earth-Centered, Earth-Fixed (ECEF) coordinate system, a speed vector in the coordinate system. For example, the speed vector includes speed components on x, y and z axes.

According to the embodiments of the present disclosure, the prediction unit 1240 may determine a distance between the user equipment 1200 and each of the multiple DU equipments at the switching time instant according to at least one of the following information and determine the optional target DU equipment of the user equipment 1200 according to the distance between the user equipment 1200 and each DU equipment: the position information of the user equipment 1200, the speed information of the user equipment 1200, and the ephemeris information of the multiple DU equipments within the service coverage of the CU equipment. For example, the prediction unit 1240 may determine a DU equipment that is close to the user equipment 1200 at the switching time instant as the optional DU equipment.

According to the embodiments of the present disclosure, the user equipment 1200 may transmit the optional target DU equipment of the user equipment 1200 to the CU equipment through the communication unit 1210, for the CU equipment to determine the candidate target DU equipment of the user equipment 1200 according to the optional target DU equipment of the user equipment 1200. For example, the user equipment 1200 may transmit identification (ID) information of the optional target DU equipment determined by the user equipment 1200 to the CU equipment.

According to the embodiments of the present disclosure, as shown in Figure 12, the user equipment 1200 may further include a calculation unit 1260 configured to calculate the Doppler frequency shift value between each optional target DU equipment and the user equipment 1200. Here the calculation unit 1260 may calculate the Doppler frequency shift value with any method known in the art, which is not limited in the present disclosure.

According to the embodiments of the present disclosure, whether the user equipment 1200 receives the Doppler frequency shift value between each candidate target DU equipment and the user equipment 1200 from the CU equipment through the communication unit 1210, or calculates the Doppler frequency shift value between each optional target DU equipment and the user equipment 1200 through the calculation unit 1260, the user equipment 1200 may perform Doppler compensation on the link between the target DU equipment and the user equipment 1200 using the Doppler frequency shift value between the target DU equipment and the user equipment 1200 after the target DU equipment to which the user equipment 1200 eventually switches is determined. The compensation herein includes uplink compensation and downlink compensation.

According to the embodiments of the present disclosure, the user equipment 1200 may further transmit the Doppler frequency shift value between each optional target DU equipment and the user equipment 1200 to the CU equipment through the communication unit 1210, for the CU equipment to transmit the Doppler frequency shift value to an optional target DU equipment. Similarly, after the target DU equipment to which the user equipment 1200 eventually switches is determined, the target DU equipment may perform Doppler compensation on the link between the target DU equipment and the user equipment 1200 according to the Doppler frequency shift value between the target DU equipment and the user equipment 1200. The compensation herein includes uplink compensation and downlink compensation.

As described above, the optional target DU equipment to which the user equipment 1200 may switch may be predicted by the user equipment 1200, and the candidate target DU equipment may be determined by the CU equipment. In this way, the user equipment 1200 determines the target DU equipment to which the user equipment 1200 eventually switches from the candidate target DU equipment.

According to the embodiments of the present disclosure, as shown in Figure 12, the user equipment 1200 may further include a selection unit 1270 configured to select the target DU equipment to which the user equipment 1200 eventually switches from one or more candidate target DU equipments included in the switching configuration information. Here, in a case where the priority information of each candidate target DU equipment is not included in the switching configuration information, the selection unit 1270 may randomly select the target DU equipment to which the user equipment 1200 eventually switches from one or more candidate target DU equipments, or may select the target DU equipment to which the user equipment 1200 eventually switches from the one or more candidate target DU equipments according to a predetermined rule. In a case where the priority of each candidate target DU equipment is included in the switching configuration information, the selection unit 1270 may select the target DU equipment to which the user equipment 1200 eventually switches according to a descending order of priority, that is, a candidate target DU equipment with the highest priority is preferentially selected as the target DU equipment to which the user equipment 1200 eventually switches.

According to the embodiments of the present disclosure, after the selection unit 1270 selects the target DU equipment from the one or more candidate target DU equipments, the switching unit 1220 may synchronize with the target DU equipment and switch from the source DU equipment to the target DU equipment. Here, if the switching unit 1220 does not successfully synchronize with the target DU equipment selected by the selection unit 1270, the selection unit 1270 may select a target DU equipment again, for example, the selection unit 1270 may randomly select a target DU equipment, select a target DU equipment according to a predetermined rule or select a target DU equipment according to a descending order of priority, until the switching unit 1220 successfully synchronizes with the target DU equipment.

In this field, the user equipment may have an ability of multi-connection, that is, the user equipment is capable of synchronizing and being connected with multiple network side devices (such as DU equipments) at the same time. Alternatively, the user equipment may not have the ability of multi-connection, that is, the user equipment can only synchronize and be connected with one network side device (such as a DU equipment) at any time. Therefore, in a case where the user equipment 1200 has the ability of multiple connections, the synchronization may be performed before switching is triggered (that is, the switching time instant). In a case where the user equipment 1200 does not have the ability of multi-connection, the synchronization may be performed after switching is triggered (that is, the switching time instant).

Therefore, according to the embodiments of the present disclosure, after the switching is triggered, the selection unit 1270 may select the target DU equipment from the one or more candidate target DU equipments. Then the switching unit 1220 synchronizes with the selected target DU equipment, and the user equipment 1200 switches from the source DU equipment to the target DU equipment.

Optionally, according to the embodiments of the present disclosure, the selection unit 1270 may select a target DU equipment from one or more candidate target DU equipments, and the switching unit 1220 may synchronize with the selected target DU equipment. Here, the selection unit 1270 may select the target DU equipment in an order, so that the switching unit 1220 synchronizes with the target DU equipment in the order until the switching unit 1220 successfully synchronizes with a DU equipment, and the candidate target DU equipment is determined as the target DU equipment to which the user equipment eventually switches. Further, after the switching is triggered, the switching unit 1220 may switch the user equipment 1200 from the source DU equipment to the target DU equipment.

According to the embodiments of the present disclosure, the user equipment 1200 may determine an operation of the switching unit 1220 according to whether the user equipment 1200 has the ability of multi-connections. In the case where user equipment 1200 has the ability of multi-connections, the connection between the user equipment 1200 and the source DU equipment is not broken when the user equipment 1200 completes synchronization with the target DU equipment, so that the user equipment 1200 may directly communicate with the target DU equipment after the switching is triggered, thereby realizing seamless switching.

The CU equipment 300 according to the embodiments of the present disclosure may serve the user equipment 1200. Therefore, all embodiments of the CU equipment 300 described above are applicable to the user equipment 1200.

### <Method Embodiment>

A wireless communication method performed by the CU equipment 300 in a wireless communication system according to an embodiment of the present disclosure is described in detail hereafter.

Figure 13 is a flowchart of the wireless communication method performed by the CU equipment 300 in a wireless communication system according to an embodiment of the present disclosure.

As shown in Figure 13, in step S1310, switching configuration information for a user equipment to switch from a source DU equipment to a target DU equipment is generated. The switching configuration information includes one or more candidate target DU equipments of the user equipment.

Next, in step S1320, the switching configuration information is transmitted to the user equipment.

Preferably, the switching configuration information further includes priority information of the one or more candidate target DU equipments of the user equipment.

Preferably, the wireless communication method further includes: transmitting the switching configuration information to a source DU equipment serving the user equipment, for the source DU equipment to establish a communication link with each of the one or more candidate target DU equipments.

Preferably, the wireless communication method further includes: determining an optional target DU equipment of the user equipment according to at least one of the following information: position information of the user equipment, speed information of the user equipment, link quality information between the user equipment and each DU equipment within a service coverage of the CU equipment, and ephemeris information of each DU equipment within the service coverage of the CU equipment; and determining the candidate target DU equipment of the user equipment according to the optional target DU equipment of the user equipment.

Preferably, the wireless communication method further includes: calculating a Doppler frequency shift value between each optional target DU equipment and the user equipment.

Preferably, the switching configuration information further includes a Doppler frequency shift value between each candidate target DU equipment and the user equipment.

Preferably, the wireless communication method further includes: receiving, from the user equipment, an optional target DU equipment of the user equipment; and determining the candidate target DU equipment of the user equipment according to the optional target DU equipment of the user equipment.

Preferably, the wireless communication method further includes: receiving, from the user equipment, a Doppler frequency shift value between each optional target DU equipment and the user equipment.

Preferably, the wireless communication method further includes: receiving a measurement report from the user equipment, the measurement report including link quality information between the user equipment and each DU equipment within a service coverage of the CU equipment; and transmitting ephemeris information of multiple DU equipments with link quality higher than a predetermined threshold to the user equipment, for the user equipment to determine the optional target DU equipment of the user equipment.

Preferably, the measurement report includes information representing that the user equipment desires to predict the optional target DU equipment of the user equipment.

Preferably, the determining the candidate target DU equipment of the user equipment further includes: transmitting the switching configuration information to each optional target DU equipment; receiving, from the optional target DU equipment, switching response information representing whether the user equipment is allowed to access; and determining the candidate target DU equipment of the user equipment according to an optional target DU equipment to which the user equipment is allowed to access.

Preferably, the wireless communication method further includes: transmitting switching duration information to each optional target DU equipment to request the optional target DU equipment to reserve a resource for the user equipment within the switching duration.

Preferably, the determining the candidate target DU equipment of the user equipment further includes: selecting the candidate target DU equipment of the user equipment from the optional target DU equipment to which the user equipment is allowed to access according to link quality information between the user equipment and the optional target DU equipment to which the user equipment is allowed to access and/or load information of the optional target DU equipment to which the user equipment is allowed to access.

Preferably, the wireless communication method further includes: generating switching configuration information for the source DU equipment to switch from the CU equipment to a target CU equipment, the switching configuration information of the source DU equipment including the target CU equipment of the source DU equipment; and transmitting the switching configuration information of the source DU equipment to the source DU equipment.

Preferably, the wireless communication method further includes: determining a switching time instant when the source DU equipment switches from the CU equipment to the target CU equipment.

Preferably, the wireless communication method further includes: determining the switching time instant and one or more candidate target CU equipments of the source DU equipment at the switching time instant according to ephemeris information of the source DU equipment and position information of a CU equipment around the source DU equipment; and determining the target CU equipment of the source DU equipment according to the one or more candidate target CU equipments of the source DU equipment.

Preferably, the wireless communication method further includes: receiving position information or ephemeris information of the CU equipment around the source DU equipment from the CU equipment around the source DU equipment.

Preferably, the determining the target CU equipment of the source DU equipment further includes: transmitting switching request information to each of the one or more candidate target CU equipments; receiving switching response information representing whether the source DU equipment is allowed to access from the candidate target CU equipment; and determining the target CU equipment of the source DU equipment according to the candidate target CU equipment to which the source DU equipment is allowed to access.

Preferably, the wireless communication method further includes: transmitting buffer data about the source DU equipment to the target CU equipment.

Preferably, the wireless communication method further includes: transmitting a forced switching instruction representing that each user equipment served by the source DU equipment is required to be switched to a target DU equipment to the source DU equipment.

Preferably, the transmitting the switching configuration information to the user equipment further includes: transmitting switching configuration information of each user equipment served by the source DU equipment to the source DU equipment, for the source DU equipment to transmit the switching configuration information of each user equipment to the user equipment.

Preferably, the switching configuration information of each user equipment served by the source DU equipment further includes effective time for the user equipment to switch from the source DU equipment to the target DU equipment.

Preferably, the CU equipment is a satellite device in a satellite communication system or a ground base station device in the satellite communication system, and the candidate target DU equipment is a satellite device or a High Altitude Platform Station in the satellite communication system.

According to the embodiments of the present disclosure, the above method may be performed by the CU equipment 300 according to the embodiments of the present disclosure. Therefore, all embodiments of the CU equipment 300 described above are applicable to the method.

A wireless communication method performed by the user equipment 1200 in a wireless communication system according to an embodiment of the present disclosure is described in detail below.

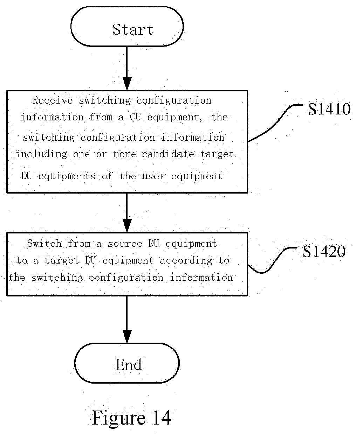

Figure 14 is a flowchart of the wireless communication method performed by the user equipment 1200 in a wireless communication system according to an embodiment of the present disclosure.

As shown in Figure 14, in step S1410, switching configuration information is received from a CU equipment. The switching configuration information includes one or more candidate target distributed unit DU equipments of the user equipment.

Next, in step S1420, a source DU equipment is switched to a target DU equipment according to the switching configuration information.

Preferably, the wireless communication method further includes: determining priority of each of the one or more candidate target DU equipments according to the switching configuration information.

Preferably, the wireless communication method further includes: determining a Doppler frequency shift value between each of the one or more candidate target DU equipments and the user equipment according to the switching configuration information.

Preferably, the wireless communication method further includes: determining the optional target DU equipment of the user equipment according to at least one of the following information: position information of the user equipment, speed information of the user equipment, and ephemeris information of a plurality of DU equipments within a service coverage of the CU equipment; and transmitting the optional target DU equipment of the user equipment to the CU equipment, for the CU equipment to determine the candidate target DU equipment of the user equipment according to the optional target DU equipment of the user equipment.

Preferably, the wireless communication method further includes: transmitting a measurement report to the CU equipment, the measurement report including link quality information between the user equipment and each DU equipment within a service coverage of the CU equipment; and receiving ephemeris information of a plurality of DU equipments with link quality higher than a predetermined threshold from the CU equipment.

Preferably, the measurement report includes information representing that the user equipment desires to predict the optional target DU equipment of the user equipment.

Preferably, the wireless communication method further includes: calculating a Doppler frequency shift value between each optional target DU equipment and the user equipment; and transmitting the Doppler frequency shift value between each optional target DU equipment and the user equipment to the CU equipment.

Preferably, the wireless communication method further includes: after switching is triggered, selecting a target DU equipment from the one or more candidate target DU equipments and synchronizing with the selected target DU equipment; and switching from the source DU equipment to the target DU equipment.

Preferably, the wireless communication method further includes: selecting a target DU equipment from the one or more candidate target DU equipments and synchronize with the selected target DU equipment; and switching from the source DU equipment to the target DU equipment after switching is triggered.

Preferably, the CU equipment is a satellite device in a satellite communication system or a ground base station device in the satellite communication system, and the candidate target DU equipment is a satellite device or a High Altitude Platform Station in the satellite communication system.

According to the embodiments of the present disclosure, the above method may be performed by the user equipment 1200 according to the embodiments of the present disclosure. Therefore, all embodiments of the user equipment 1200 described above are applicable to the method.

### <5. Application Example>

The technology according to the present disclosure may be applicable to various products.

The terrestrial base station device may be implemented as any type of base station device, such as a macro eNB and a small eNB. The terrestrial base station device may also be implemented as any type of gNB (a base station in a 5G system). The small eNB may be an eNB of a cell having a smaller coverage than a macro cell, such as a pico eNB, a micro eNB and a home (femto) eNB. Alternatively, the base station may be implemented as any other type of base station, such as a NodeB and a base transceiver station (BTS). The base station may include: a main body (also referred to as a base station device) configured to control the wireless communication; and one or more remote radio heads (RRH) arranged at a different location from the main body.

The user equipment may be implemented as a mobile terminal (such as a smartphone, a tablet personal computer (PC), a notebook PC, a portable game terminal, a portable/dongle mobile router and a digital camera) or a vehicle terminal (such as a vehicle navigation device). The user equipment may also be implemented as a terminal (which is also referred to as a machine type communication (MTC) terminal) performing machine to machine (M2M) communications. In addition, the user equipment may be a wireless communication module (such as an integrated circuit module including a single wafer) mounted on each of the above user equipments.

### <Application example of Base Station>

### (First Application Example)

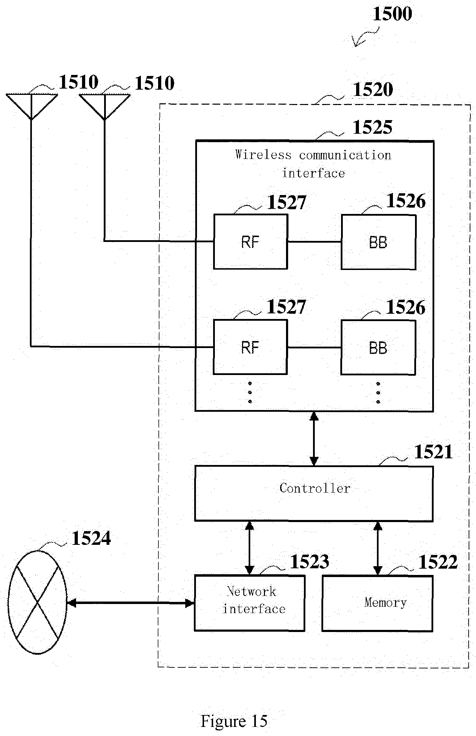

Figure 15 is a block diagram showing a first exemplary configuration of an eNB to which technology according to the present disclosure may be applied. An eNB 1500 includes one or more antennas 1510 and a base station device 1520. Each of the antennas 1510 is connected to the base station device 1520 via a RF cable.

Each of the antennas 1510 includes a single antenna element or multiple antenna elements (such as multiple antenna elements included in a multiple-input multiple-output (MIMO) antenna), and is used for the base station device 1520 to transmit and receive a wireless signal. The eNB 1500 may include multiple antennas 1510, as shown in Figure 15. For example, the multiple antennas 1510 may be compatible with multiple frequency bands used by the eNB 1500. Although Figure 15 shows an example in which the eNB 1500 includes the multiple antennas 1510, the eNB 1500 may also include a single antenna 1510.

The base station device 1520 includes a controller 1521, a memory 1522, a network interface 1523 and a wireless communication interface 1525.

The controller 1521 may be, for example, a CPU or a DSP, and operate various functions of a high layer of the base station device 1520. For example, the controller 1521 generates a data packet based on data in a signal processed by the wireless communication interface 1525 and transmits the generated packet via the network interface 1523. The controller 1521 may bundle data from multiple baseband processors to generate a bundled packet and transmit the generated bundled packet. The controller 1521 may have a logic function that performs control such as wireless resource control, wireless bearer control, mobility management, admission control, and scheduling. The control may be performed in combination with a nearby eNB or core network node. The memory 1522 includes an RAM and an ROM, and stores a program executed by the controller 1521 and various types of control data (such as a terminal list, transmission power data and scheduling data).

The network interface 1523 is a communication interface via which the base station device 1520 is connected to a core network 1524. The controller 1521 may communicate with a core network node or another eNB via the network interface 1523. In this case, the eNB 1500 may be connected to the core network node or another eNB via a logical interface (such as an interface S1 and an interface X2). The network interface 1523 may also be a wired communication interface or a wireless communication interface for wireless backhaul line. If the network interface 1523 is the wireless communication interface, the network interface 1823 may use a frequency band for wireless communication higher than a frequency band used by the wireless communication interface 1525.

The wireless communication interface 1525 supports any cellular communication scheme (such as long term evolution (LTE) and LTE-Advanced), and provides wireless connection to a terminal located in a cell of the eNB 1500 via an antenna 1510. The wireless communication interface 1525 may include, for example, a base band (BB) processor 1526 and an RF circuit 1527. The BB processor 1526 may perform, for example, encoding/decoding, modulating/demodulating and multiplexing/de-multiplexing, and various types of signal processing of layers (such as L1, medium access control (MAC), radio link control (RLC) and packet data convergence protocol (PDCP)). Instead of the controller 1521, the BB processor 1526 may have a part or all of the above logic functions. The BB processor 1526 may be implemented as a memory storing a communication control program, or a module including a processor configured to execute a program and related circuitry. The function of the BB processor 1526 may be changed by updating the program. The module may be a card or blade inserted into a slot of the base station device 1520. Alternatively, the module may be a chip mounted on the card or the blade. Further, the RF circuit 1527 may include, for example, a mixer, a filter or an amplifier, and transmits and receives a wireless signal via the antenna 1510.

As shown in Figure 15, the wireless communication interface 1525 may include multiple BB processors 1526. For example, the multiple BB processors 1526 may be compatible with multiple frequency bands used by the eNB 1500. As shown in Figure 15, the wireless communication interface 1525 may include multiple RF circuits 1527. For example, the multiple RF circuits 1527 may be compatible with multiple antenna elements. Although Figure 15 shows an example in which the wireless communication interface 1525 includes the multiple BB processors 1526 and the multiple RF circuits 1527, the wireless communication interface 1525 may include a single BB processor 1526 or a single RF circuit 1527.

### (Second Application Example)

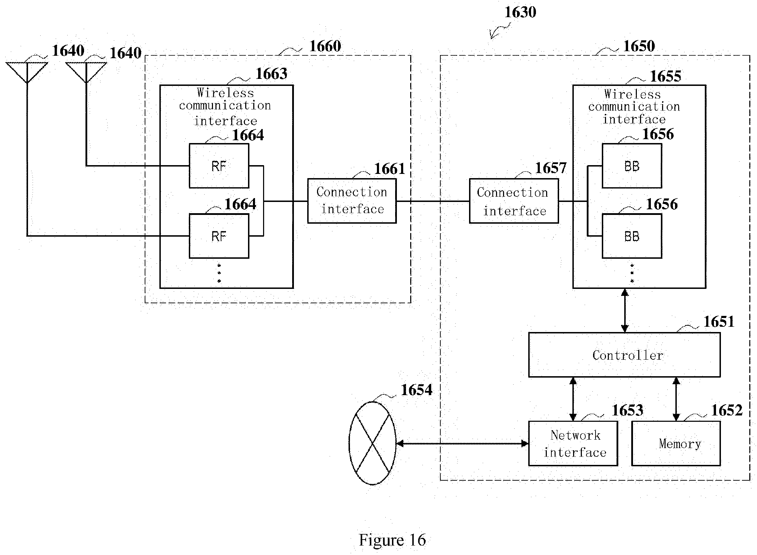

Figure 16 is a block diagram showing a second exemplary configuration of the eNB to which the technology of the present disclosure may be applied. An eNB 1630 includes one or more antennas 1640, a base station device 1650 and an RRH 1660. The RRH 1660 may be connected to each of the antennas 1640 via an RF cable. The base station device 1650 may be connected to the RRH 1660 via a high speed line such as an optical fiber cable.

Each of the antennas 1640 includes a single antenna element or multiple antenna elements (such as multiple antenna elements included in a MIMO antenna), and is used for the RRH 1660 to transmit and receive a wireless signal. As shown in Figure 16, the eNB 1630 may include multiple antennas 1640. For example, the multiple antennas 1640 may be compatible with multiple frequency bands used by the eNB 1930. Although Figure 16 shows an example in which the eNB 1630 includes the multiple antennas 1640, the eNB 1630 may also include a single antenna 1640.

The base station device 1650 includes a controller 1651, a memory 1652, a network interface 1653, a wireless communication interface 1655, and a connection interface 1657. The controller 1651, the memory 1652, and the network interface 1653 are respectively the same as the controller 1521, the memory 1522, and the network interface 1523 described with reference to Figure 15.

The wireless communication interface 1655 supports any cellular communication schemes (such as LTE and LTE-advanced), and provides wireless communication with a terminal located in a sector corresponding to the RRH 1660 via the RRH 1660 and the antenna 1640. The wireless communication interface 1655 may generally include, for example, a BB processor 1656. Except for the BB processor 1656 being connected to an RF circuit 1664 of the RRH 1660 via the connection interface 1657, the BB processor 1656 is the same as the BB processor 1526 described with reference to Figure 15. The wireless communication interface 1655 may include multiple BB processors 1656, as shown in Figure 16. For example, the multiple BB processors 1656 may be compatible with multiple frequency bands used by the eNB 1630. Although Figure 16 shows an example in which the wireless communication interface 1655 includes the multiple BB processors 1656, the wireless communication interface 1655 may also include a single BB processor 1656.

The connection interface 1657 is an interface for connecting the base station device 1650 (the wireless communication interface 1655) to the RRH 1660. The connection interface 1657 may also be a communication module for communication in the above high speed line that connects the base station device 1650 (the wireless communication interface 1655) to the RRH 1660.

The RRH 1660 includes a connection interface 1661 and a wireless communication interface 1663.

The connection interface 1661 is an interface for connecting the RRH 1660 (the wireless communication interface 1663) to the base station device 1650. The connection interface 1661 may also be a communication module for communication in the above-described high speed line.

The wireless communication interface 1663 transmits and receives a wireless signal via the antenna 1640. The wireless communication interface 1663 may generally include, for example, the RF circuit 1664. The RF circuit 1664 may include, for example, a mixer, a filter, and an amplifier, and transmits and receives a wireless signal via the antenna 1640. The wireless communication interface 1663 may include multiple RF circuits 1664, as shown in Figure 16. For example, the multiple RF circuits 1664 may support multiple antenna elements. Although Figure 16 shows an example in which the wireless communication interface 1663 includes the multiple RF circuits 1664, the wireless communication interface 1663 may also include a single RF circuit 1664.

In the eNB 1500 and the eNB 1630 respectively shown in Figure 15 and Figure 16, the generation unit 310, the prediction unit 330, the determination unit 340, the calculation unit 340, the generation unit 360, the prediction unit 370 and the determination unit 380 that are shown in Figure 3 may be implemented by the controller 1521 and/or the controller 1651. At least a part of functions may also be implemented by the controller 1521 and the controller 1651. For example, the controller 1521 and/or the controller 1651 may generate switching configuration information for the user equipment, predict the optional target DU equipments of the user equipment, determine the candidate target DU equipments of the user equipment, calculate the Doppler frequency shift value between the user equipment and the DU equipment, generate switching configuration information for the DU equipment, predict the candidate target CU equipment of the DU equipment, and determine the target CU equipment of the DU equipment by executing instructions stored in a memory.

### <Application example of Terminal Device>

### (First Application Example)

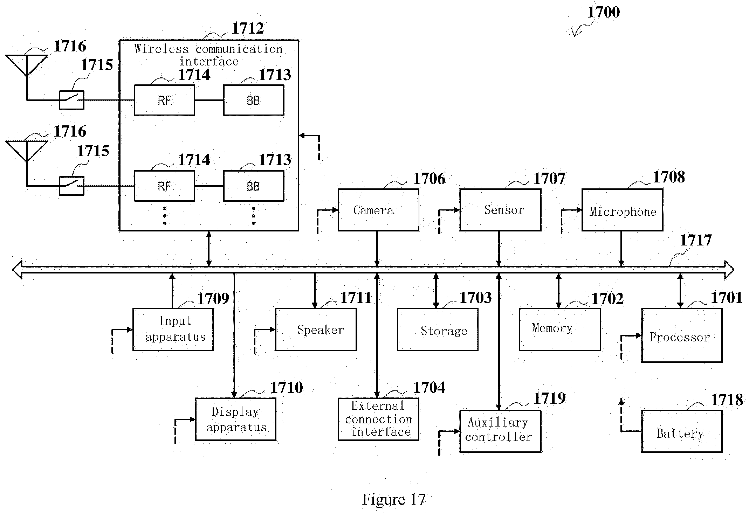

Figure 17 is a block diagram showing an exemplary configuration of a smartphone 1700 to which the technology according to the present disclosure may be applied. The smartphone 1700 includes a processor 1701, a memory 1702, a storage apparatus 1703, an external connection interface 1704, a camera 1706, a sensor 1707, a microphone 1708, an input apparatus 1709, a display apparatus 1710, a loudspeaker 1711, a wireless communication interface 1712, one or more antenna switches 1715, one or more antennas 1716, a bus 1717, a battery 1718 and an auxiliary controller 1719.

The processor 1701 may be, for example, a CPU or a system on chip (SoC), and controls functions of an application layer and another layer of the smartphone 1700. The memory 1702 includes an RAM and an ROM, and stores data and a program executed by the processor 1701. The storage apparatus 1703 may include a storage medium such as a semiconductor memory and a hard disk. The external connection interface 1704 is an interface for connecting an external apparatus (such as a memory card and a universal serial bus (USB) apparatus) to the smartphone 1700.

The camera 1706 includes an image sensor (such as a charge coupled device (CCD) and a complementary metal oxide semiconductor (CMOS)), and generates a captured image. The sensor 1707 may include a group of sensors such as a measurement sensor, a gyro sensor, a geomagnetic sensor, and an acceleration sensor. The microphone 1708 converts sound that is inputted to the smartphone 1700 into an audio signal. The input apparatus 1709 includes, for example, a touch sensor configured to detect a touch on a screen of the display apparatus 1710, a keypad, a keyboard, a button, or a switch, and receives an operation or information inputted from a user. The display apparatus 1710 includes a screen (such as a liquid crystal display (LCD) and an organic light-emitting diode (OLED) display), and displays an output image of the smartphone 1700. The loudspeaker 1711 is configured to convert an audio signal outputted from the smartphone 1700 into sound.

The wireless communication interface 1712 supports any cellular communication scheme (such as LTE and LTE-Advanced), and performs wireless communications. The wireless communication interface 1712 may include, for example, a BB processor 1713 and an RF circuit 1714. The BB processor 1713 may perform, for example, coding/decoding, modulating/demodulating and multiplexing/de-multiplexing, and perform various types of signal processing for wireless communications. The RF circuit 1714 may include, for example, a mixer, a filter and an amplifier, and transmits and receives a wireless signal via an antenna 1716. The wireless communication interface 1712 may be a chip module having the BB processor 1713 and the RF circuit 1714 integrated thereon. As shown in Figure 17, the wireless communication interface 1712 may include multiple BB processors 1713 and multiple RF circuits 1714. Although Figure 17 shows an example in which the wireless communication interface 1712 includes the multiple BB processors 1713 and the multiple RF circuits 1714, the wireless communication interface 1712 may include a single BB processor 1713 or a single RF circuit 1714.

Besides the cellular communication scheme, the wireless communication interface 1712 may support an additional type of wireless communication scheme, such as a short-distance wireless communication scheme, a near field communication scheme and a wireless local area network (LAN) scheme. In this case, the wireless communication interface 1712 may include the BB processor 1713 and the RF circuit 1714 for each wireless communication scheme.

Each of the antenna switches 1715 switches a connection destination of the antenna 1716 among multiple circuits (such as circuits for different wireless communication schemes) included in the wireless communication interface 1712.

Each of the antennas 1716 includes a single antenna element or multiple antenna elements (such as multiple antenna elements included in an MIMO antenna), and is used for the wireless communication interface 1712 to transmit and receive a wireless signal. The smartphone 1700 may include multiple antennas 1716, as shown in Figure 17. Although Figure 17 shows an example in which the smartphone 1700 includes the multiple antennas 1716, the smartphone 1700 may also include a single antenna 1716.

In addition, the smartphone 1700 may include an antenna 1716 for each type of wireless communication scheme. In this case, the antenna switches 1715 may be omitted from the configuration of the smartphone 1700.

The processor 1701, the memory 1702, the storage apparatus 1703, the external connection interface 1704, the camera 1706, the sensor 1707, the microphone 1708, the input apparatus 1709, the display apparatus 1710, the loudspeaker 1711, the wireless communication interface 1712, and the auxiliary controller 1719 are connected to each other via the bus 1717. The battery 1718 supplies power to blocks of the smartphone 1700 shown in Figure 17 via feeders that are partially shown with dashed lines in the drawings. The auxiliary controller 1719, for example, operates a minimum necessary function of the smartphone 1700 in a sleep mode.

In the smartphone 1700 shown in Figure 17, the switching unit 1220, the determination unit 1230, the prediction unit 1240, the measurement unit 1250, the calculation unit 1260 and the selection unit 1270 that are shown in Figure 12 may be implemented by the processor 1701 or the auxiliary controller 1719. At least a part of functions may also be implemented by the processor 1701 or the auxiliary controller 1719. For example, the processor 1701 or the auxiliary controller 1719 may switch from the source DU equipment to the target DU equipment, determine the candidate target DU equipment, predict the optional target DU equipment, measure link quality, calculate the Doppler frequency shift value and select the target DU equipment by executing instructions stored in the memory 1702 or the storage apparatus 1703.

### (Second Application Example)

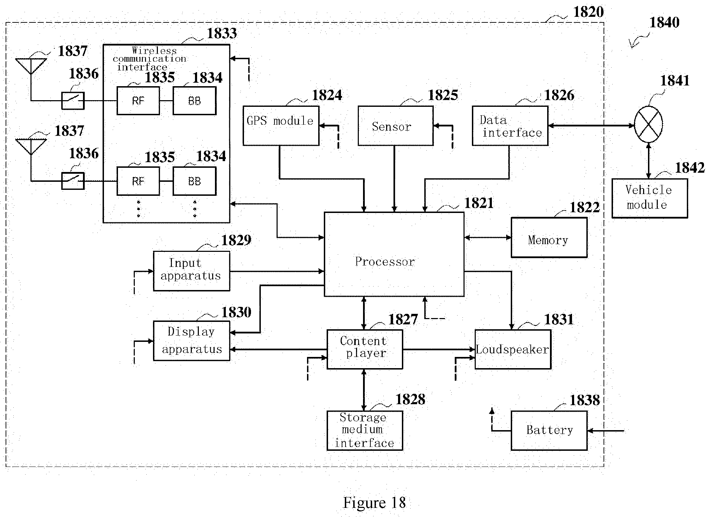

Figure 18 is a block diagram showing an exemplary configuration of a vehicle navigation device 1820 to which the technology according to the present disclosure may be applied. The vehicle navigation device 1820 includes a processor 1821, a memory 1822, a global positioning system (GPS) module 1824, a sensor 1825, a data interface 1826, a content player 1827, a storage medium interface 1828, an input apparatus 1829, a display apparatus 1830, a loudspeaker 1831, a wireless communication interface 1833, one or more antenna switches 1836, one or more antennas 1837, and a battery 1838.

The processor 1821 may be, for example, a CPU or a SoC, and controls a navigation function and another function of the vehicle navigation device 1820. The memory 1822 includes an RAM and an ROM, and stores a program executed by the processor 1821, and data.

The GPS module 1824 uses a GPS signal received from a GPS satellite to calculate a location (such as a latitude, a longitude, and an altitude) of the vehicle navigation device 1820. The sensor 1825 may include a group of sensors such as a gyro sensor, a geomagnetic sensor, and an air pressure sensor. The data interface 1826 is connected to, for example, a vehicle network 1841 via a terminal that is not shown, and acquires data (such as vehicle speed data) generated by the vehicle.

The content player 1827 reproduces content stored in a storage medium (such as a CD and a DVD) that is inserted into the storage medium interface 1828. The input apparatus 1829 includes, for example, a touch sensor configured to detect a touch on a screen of the display apparatus 1830, a button, or a switch, and receives an operation or information inputted by a user. The display apparatus 1830 includes a screen such as a LCD or an OLED display, and displays an image of the navigation function or reproduced content. The loudspeaker 1831 outputs sound of the navigation function or the reproduced content.

The wireless communication interface 1833 supports any cellular communication scheme (such as LTE and LTE-Advanced), and performs wireless communications. The wireless communication interface 1833 may generally include, for example, a BB processor 1834 and an RF circuit 1835. The BB processor 1834 may perform, for example, encoding/decoding, modulating/demodulating, and multiplexing/de-multiplexing, and performs various types of signal processing for wireless communications. In addition, the RF circuit 1835 may include, for example, a mixer, a filter, and an amplifier, and transmits and receives a wireless signal via the antenna 1837. The wireless communication interface 1833 may also be a chip module having the BB processor 1834 and the RF circuit 1835 integrated thereon. The wireless communication interface 1833 may include multiple BB processors 1834 and multiple RF circuits 1835, as shown in Figure 18. Although Figure 18 shows an example in which the wireless communication interface 1833 includes the multiple BB processors 1834 and the multiple RF circuits 1835, the wireless communication interface 1833 may include a single BB processor 1834 or a single RF circuit 1835.

In addition to a cellular communication scheme, the wireless communication interface 1833 may support another type of wireless communication scheme such as a short-distance wireless communication scheme, a near field communication scheme, and a wireless LAN scheme. In that case, the wireless communication interface 1833 may include a BB processor 1834 and an RF circuit 1835 for each wireless communication scheme.

Each of the antenna switches 1836 switches a connection destination of the antenna 1837 among multiple circuits (such as circuits for different wireless communication schemes) included in the wireless communication interface 1833.

Each of the antennas 1837 includes a single antenna element or multiple antenna elements (such as multiple antenna elements included in an MIMO antenna), and is used for the wireless communication interface 1833 to transmit and receive a wireless signal. The vehicle navigation device 1820 may include multiple antennas 1837, as shown in Figure 18. Although Figure 18 shows an example in which the vehicle navigation device 1820 includes the multiple antennas 1837, the vehicle navigation device 1820 may include a single antenna 1837.

Furthermore, the vehicle navigation device 1820 may include an antenna 1837 for each wireless communication scheme. In that case, the antenna switches 1836 may be omitted from the configuration of the vehicle navigation device 1820.

The battery 1838 supplies power to blocks of the vehicle navigation device 1820 shown in Figure 18 via feeders that are partially shown as dashed lines in Figure 18. The battery 1838 accumulates power supplied from the vehicle.

In the vehicle navigation device 1820 shown in Figure 18, the switching unit 1220, the determination unit 1230, the prediction unit 1240, the measurement unit 1250, the calculation unit 1260 and the selection unit 1270 that are shown in Figure 12 may be implemented by the processor 1821. At least a part of functions may also be implemented by the processor 1821. For example, the processor 1821 may switch from the source DU equipment to the target DU equipment, determine the candidate target DU equipment, predict the optional target DU equipment, measure link quality, calculate the Doppler frequency shift value and select the target DU equipment by executing instructions stored in the memory 1822.

The technology of the present disclosure may also be implemented as a vehicle system (or a vehicle) 1840 including one or more blocks in the vehicle navigation device 1820, the vehicle network 1841, and a vehicle module 1842. The vehicle module 1842 generates vehicle data (such as a vehicle speed, an engine speed, and fault information), and outputs the generated data to the vehicle network 1841.

Preferred embodiments of the present disclosure are described above with reference to the drawings. However, the present disclosure is not limited to the above examples. Those skilled in the art may obtain various modifications and changes within the scope of the appended claims. It should understand that these modifications and changes fall within the technical scope of the present disclosure.

For example, a unit shown with a dashed-line block in functional block diagrams shown in the drawings is optional in a corresponding device. Further, optional functional units may be combined in a suitable manner to achieve required functions.

For example, in the above embodiments, multiple functions included in one unit may be achieved by separate apparatuses. Alternately, in the above embodiments, multiple functions achieved by multiple units may be achieved by separate apparatuses. In addition, one of the above functions may be achieved by multiple units. These configurations should be included in the technical scope of the present disclosure.

In this specification, the steps described in the flowcharts include not only processing performed in time series in the described order but also processing performed in parallel or individually instead of in time series. In addition, the steps performed in time series may be performed in a different order.

Although the embodiments of the present disclosure are described above in detail with reference to the drawings, it should be understood that the above-described embodiments are merely used for illustrating the present disclosure rather than intended to limit the present disclosure. Those skilled in the art can make various modifications and variations to the above-described embodiments without departing from the substance and scope of the present disclosure. Therefore, the scope of the present disclosure is defined only by the appended claims.

## Claims

1. A Centralized Unit CU equipment (300), comprising processing circuitry (310, 320, 360) configured to:
generate switching configuration information for a user equipment (1200) to switch from a source Distributed Unit DU equipment to a target DU equipment, the switching configuration information comprising one or more candidate target DU equipments of the user equipment; and
transmit the switching configuration information to the user equipment; and
**characterised in that** processing circuit is further configured to:
generate switching configuration information for the source DU equipment to switch from the CU equipment to a target CU equipment, the switching configuration information of the source DU equipment comprising the target CU equipment of the source DU equipment; and transmit the switching configuration information of the source DU equipment to the source DU equipment.

2. The CU equipment according to claim 1, wherein the processing circuitry is further configured to:
determine an optional target DU equipment of the user equipment according to at least one of the following information: position information of the user equipment, speed information of the user equipment, link quality information between the user equipment and each DU equipment within a service coverage of the CU equipment, and ephemeris information of each DU equipment within the service coverage of the CU equipment; and
determine the candidate target DU equipment of the user equipment according to the optional target DU equipment of the user equipment.

3. The CU equipment according to claim 1, wherein the processing circuitry is further configured to:
receive, from the user equipment, an optional target DU equipment of the user equipment; and
determine the candidate target DU equipment of the user equipment according to the optional target DU equipment of the user equipment.

4. The CU equipment according to claim 3, wherein the processing circuitry is further configured to:
receive a measurement report from the user equipment, the measurement report comprising link quality information between the user equipment and each DU equipment within a service coverage of the CU equipment; and
transmit ephemeris information of a plurality of DU equipments with link quality higher than a predetermined threshold to the user equipment, for the user equipment to determine the optional target DU equipment of the user equipment.

5. The CU equipment according to any one of claims 2 to 4, wherein the processing circuitry is further configured to:
transmit switching request information to each optional target DU equipment;
receive, from the optional target DU equipment, switching response information representing whether the user equipment is allowed to access; and
determine the candidate target DU equipment of the user equipment according to an optional target DU equipment to which the user equipment is allowed to access.

6. The CU equipment according to claim 5, wherein the processing circuitry is further configured to:
select the candidate target DU equipment of the user equipment from the optional target DU equipment to which the user equipment is allowed to access according to link quality information between the user equipment and the optional target DU equipment to which the user equipment is allowed to access and/or load information of the optional target DU equipment to which the user equipment is allowed to access.

7. The CU equipment according to claim 1, wherein the processing circuitry is further configured to:
determine a switching time instant when the source DU equipment switches from the CU equipment to the target CU equipment and one or more candidate target CU equipments of the source DU equipment at the switching time instant according to ephemeris information of the source DU equipment and position information of a CU equipment around the source DU equipment; and
determine the target CU equipment of the source DU equipment according to the one or more candidate target CU equipments of the source DU equipment.

8. The CU equipment according to claim 7, wherein the processing circuitry is further configured to:
transmit switching request information to each of the one or more candidate target CU equipments;
receive switching response information representing whether the source DU equipment is allowed to access from the candidate target CU equipment; and
determine the target CU equipment of the source DU equipment according to the candidate target CU equipment to which the source DU equipment is allowed to access.

9. The CU equipment according to claim 1, wherein the processing circuitry is further configured to:
transmit a forced switching instruction representing that each user equipment served by the source DU equipment is required to be switched to a corresponding target DU equipment to the source DU equipment.

10. A system comprising a Centralized Unit CU equipment (300) according to claim 1, and a user equipment, the user equipment (1200) comprising processing circuitry (1210, 1220) configured to:
receive switching configuration information from a Centralized Unit CU equipment, the switching configuration information comprising one or more candidate target distributed unit DU equipments of the user equipment; and
switch from a source DU equipment to a target DU equipment according to the switching configuration information.

11. The system according to claim 10, wherein the processing circuitry is further configured to:
determine the optional target DU equipment of the user equipment according to at least one of the following information: position information of the user equipment, speed information of the user equipment, and ephemeris information of a plurality of DU equipments within a service coverage of the CU equipment; and
transmit the optional target DU equipment of the user equipment to the CU equipment, for the CU equipment to determine the candidate target DU equipment of the user equipment according to the optional target DU equipment of the user equipment.

12. The system according to claim 10, wherein the processing circuitry is further configured to:
after switching is triggered, select a target DU equipment from the one or more candidate target DU equipments and synchronize with the selected target DU equipment; and
switch from the source DU equipment to the target DU equipment.

13. The system according to claim 10, wherein the processing circuitry is further configured to:
select a target DU equipment from the one or more candidate target DU equipments and synchronize with the selected target DU equipment; and
switch from the source DU equipment to the target DU equipment after switching is triggered.

14. A wireless communication method performed by a Centralized Unit CU equipment (300), comprising:
generating (S1310) switching configuration information for a user equipment to switch from a source Distributed Unit DU equipment to a target DU equipment, the switching configuration information comprising one or more candidate target DU equipments of the user equipment; and
transmitting (S1320) the switching configuration information to the user equipment;
**characterised in** generating switching configuration information for the source DU equipment to switch from the CU equipment to a target CU equipment, the switching configuration information of the source DU equipment comprising the target CU equipment of the source DU equipment; and transmitting the switching configuration information of the source DU equipment to the source DU equipment.

## Patentansprüche

1. Zentraleinheitsausrüstung (CU-Ausrüstung) (300), umfassend Verarbeitungsschalttechnik (310, 320, 360), die konfiguriert ist, um:
Umschaltkonfigurationsinformationen für eine Benutzerausrüstung (1200) zu erzeugen, um von einer Quellenausrüstung für eine verteilte Einheit (DU) zu einer DU-Zielausrüstung umzuschalten, wobei die Umschaltkonfigurationsinformationen einen oder mehrere Kandidaten für DU-Zielausrüstungen der Benutzerausrüstung umfassen; und
die Umschaltkonfigurationsinformationen an die Benutzerausrüstung zu übertragen; und **dadurch gekennzeichnet, dass** die Verarbeitungsschaltung ferner konfiguriert ist, um:
Umschaltkonfigurationsinformationen für die DU-Quellenausrüstung zu erzeugen, um von der CU-Ausrüstung zu einer CU-Zielausrüstung umzuschalten, wobei die Umschaltkonfigurationsinformationen der DU-Quellenausrüstung die CU-Zielausrüstung der DU-Quellenausrüstung umfassen; und die Umschaltkonfigurationsinformationen der DU-Quellenausrüstung an die DU-Quellenausrüstung zu übertragen.

2. CU-Ausrüstung nach Anspruch 1, wobei die Verarbeitungsschalttechnik ferner konfiguriert ist, um:
eine optionale DU-Zielausrüstung der Benutzerausrüstung gemäß mindestens einer der folgenden Informationen zu bestimmen:
Positionsinformationen der Benutzerausrüstung, Geschwindigkeitsinformationen der Benutzerausrüstung, Verbindungsqualitätsinformationen zwischen der Benutzerausrüstung und jeder DU-Ausrüstung innerhalb einer Servicereichweite der CU-Ausrüstung und Ephemerideninformationen jeder DU-Ausrüstung innerhalb der Servicereichweite der CU-Ausrüstung; und
den Kandidaten für eine DU-Zielausrüstung der Benutzerausrüstung gemäß der optionalen DU-Zielausrüstung der Benutzerausrüstung zu bestimmen.

3. CU-Ausrüstung nach Anspruch 1, wobei die Verarbeitungsschalttechnik ferner konfiguriert ist, um:
von der Benutzerausrüstung eine optionale DU-Zielausrüstung der Benutzerausrüstung zu empfangen; und
den Kandidaten für eine DU-Zielausrüstung der Benutzerausrüstung gemäß der optionalen DU-Zielausrüstung der Benutzerausrüstung zu bestimmen.

4. CU-Ausrüstung nach Anspruch 3, wobei die Verarbeitungsschalttechnik ferner konfiguriert ist, um:
einen Messbericht von der Benutzerausrüstung zu empfangen, wobei der Messbericht Verbindungsqualitätsinformationen zwischen der Benutzerausrüstung und jeder DU-Ausrüstung innerhalb einer Servicereichweite der CU-Ausrüstung umfasst; und
Ephemerideninformationen einer Vielzahl von DU-Ausrüstungen mit einer Verbindungsqualität, die höher als ein vorbestimmter Schwellenwert ist, an die Benutzerausrüstung zu übertragen, damit die Benutzerausrüstung die optionale DU-Zielausrüstung der Benutzerausrüstung bestimmt.

5. CU-Ausrüstung nach einem der Ansprüche 2 bis 4, wobei die Verarbeitungsschalttechnik ferner konfiguriert ist, um:
Umschaltanforderungsinformationen an jede optionale DU-Zielausrüstung zu übertragen;
von der optionalen DU-Zielausrüstung Umschaltantwortinformationen zu empfangen, die darstellen, ob die Benutzerausrüstung zugreifen darf; und
den Kandidaten für eine DU-Zielausrüstung der Benutzerausrüstung gemäß einer optionalen DU-Zielausrüstung zu bestimmen, auf die die Benutzerausrüstung zugreifen darf.

6. CU-Ausrüstung nach Anspruch 5, wobei die Verarbeitungsschalttechnik ferner konfiguriert ist, um:
den Kandidaten für die DU-Zielausrüstung der Benutzerausrüstung aus der optionalen DU-Zielausrüstung, auf die die Benutzerausrüstung zugreifen darf, gemäß Verbindungsqualitätsinformationen zwischen der Benutzerausrüstung und der optionalen DU-Zielausrüstung, auf die die Benutzerausrüstung zugreifen darf, und/oder Lastinformationen der optionalen DU-Zielausrüstung, auf die die Benutzerausrüstung zugreifen darf, auszuwählen.

7. CU-Ausrüstung nach Anspruch 1, wobei die Verarbeitungsschalttechnik ferner konfiguriert ist, um:
einen Umschaltzeitpunkt, zu dem die DU-Quellenausrüstung von der CU-Ausrüstung zu der CU-Zielausrüstung umschaltet, und einen oder mehrere Kandidaten für die CU-Zielausrüstungen der DU-Quellenausrüstung zum Umschaltzeitpunkt gemäß Ephemerideninformationen der DU-Quellenausrüstung und Positionsinformationen einer CU-Ausrüstung um die DU-Quellenausrüstung zu bestimmen; und
die CU-Zielausrüstung der DU-Quellenausrüstung gemäß dem einen oder den mehreren Kandidaten für CU-Zielausrüstungen der DU-Quellenausrüstung zu bestimmen.

8. CU-Ausrüstung nach Anspruch 7, wobei die Verarbeitungsschalttechnik ferner konfiguriert ist, um:
Umschaltanforderungsinformationen an jeden des einen oder der mehreren Kandidaten für CU-Zielausrüstungen zu übertragen;
Umschaltanforderungsinformationen zu empfangen, die darstellen, ob der DU-Quellenausrüstung der Zugriff von dem Kandidaten für die CU-Zielausrüstung gestattet ist; und
die CU-Zielausrüstung der DU-Quellenausrüstung gemäß dem Kandidaten für die CU-Zielausrüstung zu bestimmen, auf die die DU-Quellenausrüstung zugreifen darf.

9. CU-Ausrüstung nach Anspruch 1, wobei die Verarbeitungsschalttechnik ferner konfiguriert ist, um:
eine Zwangsumschaltungsanweisung, die darstellt, dass jede von der DU-Quellenausrüstung bediente Benutzerausrüstung zu einer entsprechenden DU-Zielausrüstung umgeschaltet werden muss, an die DU-Quellenausrüstung zu übertragen.

10. System, umfassend eine Zentraleinheitsausrüstung (CU-Ausrüstung) (300) nach Anspruch 1 und eine Benutzerausrüstung, wobei die Benutzerausrüstung (1200) eine Verarbeitungsschalttechnik (1210, 1220) umfasst, die konfiguriert ist, um:
Umschaltkonfigurationsinformationen von einer Zentraleinheitsausrüstung (CU-Ausrüstung) zu empfangen, wobei die Umschaltkonfigurationsinformationen einen oder mehrere Kandidaten für verteilte Einheitszielausrüstungen (DU-Zielausrüstungen) der Benutzerausrüstung umfassen; und
von einer DU-Quellenausrüstung zu einer DU-Zielausrüstung gemäß den Umschaltkonfigurationsinformationen umzuschalten.

11. System nach Anspruch 10, wobei die Verarbeitungsschalttechnik ferner konfiguriert ist, um:
die optionale DU-Zielausrüstung der Benutzerausrüstung gemäß mindestens einer der folgenden Informationen zu bestimmen:
Positionsinformationen der Benutzerausrüstung, Geschwindigkeitsinformationen der Benutzerausrüstung und Ephemerideninformationen einer Vielzahl von DU-Ausrüstungen innerhalb der Servicereichweite der CU-Ausrüstung; und
die optionale DU-Zielausrüstung der Benutzerausrüstung an die CU-Ausrüstung zu übertragen, damit die CU-Ausrüstung den Kandidaten für die DU-Zielausrüstung der Benutzerausrüstung gemäß der optionalen DU-Zielausrüstung der Benutzerausrüstung bestimmt.

12. System nach Anspruch 10, wobei die Verarbeitungsschalttechnik ferner konfiguriert ist, um:
nach Auslösen des Umschaltens eine DU-Zielausrüstung aus dem einen oder den mehreren Kandidaten für die DU-Zielausrüstungen auszuwählen und mit der ausgewählten DU-Zielausrüstung zu synchronisieren; und
von der DU-Quellenausrüstung zu der DU-Zielausrüstung umzuschalten.

13. System nach Anspruch 10, wobei die Verarbeitungsschalttechnik ferner konfiguriert ist, um:
eine DU-Zielausrüstung aus dem einen oder den mehreren Kandidaten für die DU-Zielausrüstungen auszuwählen und mit der ausgewählten DU-Zielausrüstung zu synchronisieren; und
von der DU-Quellenausrüstung zu der DU-Zielausrüstung umzuschalten, nachdem das Umschalten ausgelöst wurde.

14. Drahtloses Kommunikationsverfahren, das durch eine Zentraleinheitsausrüstung (CU-Ausrüstung) (300) durchgeführt wird, umfassend:
Erzeugen (S1310) von Umschaltkonfigurationsinformationen für eine Benutzerausrüstung, um von einer Quellenausrüstung für eine verteilte Einheit (DU) zu einer DU-Zielausrüstung umzuschalten, wobei die Umschaltkonfigurationsinformationen einen oder mehrere Kandidaten für DU-Zielausrüstungen der Benutzerausrüstung umfassen; und
Übertragen (S1320) der Umschaltkonfigurationsinformationen an die Benutzerausrüstung; **gekennzeichnet durch**
Erzeugen von Umschaltkonfigurationsinformationen für die DU-Quellenausrüstung, um von der CU-Ausrüstung zu einer CU-Zielausrüstung umzuschalten, wobei die Umschaltkonfigurationsinformationen der DU-Quellenausrüstung die CU-Zielausrüstung der DU-Quellenausrüstung umfassen;
und Übertragen der Umschaltkonfigurationsinformationen der DU-Quellenausrüstung an die DU-Quellenausrüstung.

## Revendications

1. Équipement d'unité centralisée, CU (300), comprenant une circuiterie de traitement (310, 320, 360) configurée pour :
générer des informations de configuration de commutation pour un équipement utilisateur (1200) afin de commuter d'un équipement d'unité distribuée, DU, source vers un équipement DU cible, les informations de configuration de commutation comprenant un ou plusieurs équipements DU cibles candidats de l'équipement utilisateur ; et
transmettre les informations de configuration de commutation à l'équipement utilisateur ; et **caractérisé en ce que** le circuit de traitement est en outre configuré pour :
générer des informations de configuration de commutation pour l'équipement DU source afin de commuter de l'équipement CU vers un équipement CU cible, les informations de configuration de commutation de l'équipement DU source comprenant l'équipement CU cible de l'équipement DU source ; et transmettre les informations de configuration de commutation de l'équipement DU source à l'équipement DU source.

2. Équipement CU selon la revendication 1, dans lequel la circuiterie de traitement est en outre configurée pour :
déterminer un équipement DU cible facultatif de l'équipement utilisateur selon au moins l'une parmi les informations suivantes : des informations de position de l'équipement utilisateur, des informations de vitesse de l'équipement utilisateur, des informations de qualité de liaison entre l'équipement utilisateur et chaque équipement DU dans une couverture de service de l'équipement CU, et des informations d'éphémérides de chaque équipement DU dans la couverture de service de l'équipement CU ; et
déterminer l'équipement DU cible candidat de l'équipement utilisateur selon l'équipement DU cible facultatif de l'équipement utilisateur.

3. Équipement CU selon la revendication 1, dans lequel la circuiterie de traitement est en outre configurée pour :
recevoir, à partir de l'équipement utilisateur, un équipement DU cible facultatif de l'équipement utilisateur ; et
déterminer l'équipement DU cible candidat de l'équipement utilisateur selon l'équipement DU cible facultatif de l'équipement utilisateur.

4. Équipement CU selon la revendication 3, dans lequel la circuiterie de traitement est en outre configurée pour :
recevoir un rapport de mesure à partir de l'équipement utilisateur, le rapport de mesure comprenant des informations de qualité de liaison entre l'équipement utilisateur et chaque équipement DU dans une couverture de service de l'équipement CU ; et
transmettre des informations d'éphémérides d'une pluralité d'équipements DU avec une qualité de liaison supérieure à un seuil prédéterminé à l'équipement utilisateur, pour que l'équipement utilisateur détermine l'équipement DU cible facultatif de l'équipement utilisateur.

5. Équipement CU selon l'une quelconque des revendications 2 à 4, dans lequel la circuiterie de traitement est en outre configurée pour :
transmettre des informations de demande de commutation à chaque équipement DU cible facultatif ;
recevoir, à partir de l'équipement DU cible facultatif, des informations de réponse de commutation représentant le fait de savoir si l'équipement utilisateur est autorisé à accéder ; et
déterminer l'équipement DU cible candidat de l'équipement utilisateur selon un équipement DU cible facultatif auquel l'équipement utilisateur est autorisé à accéder.

6. Équipement CU selon la revendication 5, dans lequel la circuiterie de traitement est en outre configurée pour :
sélectionner l'équipement DU cible candidat de l'équipement utilisateur à partir de l'équipement DU cible facultatif auquel l'équipement utilisateur est autorisé à accéder selon des informations de qualité de liaison entre l'équipement utilisateur et l'équipement DU cible facultatif auquel l'équipement utilisateur est autorisé à accéder et/ou des informations de charge de l'équipement DU cible facultatif auquel l'équipement utilisateur est autorisé à accéder.

7. Équipement CU selon la revendication 1, dans lequel la circuiterie de traitement est en outre configurée pour :
déterminer un instant de commutation où l'équipement DU source commute de l'équipement CU vers l'équipement CU cible et un ou plusieurs équipements CU cibles candidats de l'équipement DU source à l'instant de commutation selon des informations d'éphémérides de l'équipement DU source et des informations de position d'un équipement CU autour de l'équipement DU source ; et
déterminer l'équipement CU cible de l'équipement DU source selon le ou les équipements CU cibles candidats de l'équipement DU source.

8. Équipement CU selon la revendication 7, dans lequel la circuiterie de traitement est en outre configurée pour :
transmettre des informations de demande de commutation à chacun du ou des équipements CU cibles candidats ;
recevoir des informations de réponse de commutation représentant le fait de savoir si l'équipement DU source est autorisé à accéder à partir de l'équipement CU cible candidat ; et
déterminer l'équipement CU cible de l'équipement DU source selon l'équipement CU cible candidat auquel l'équipement DU source est autorisé à accéder.

9. Équipement CU selon la revendication 1, dans lequel la circuiterie de traitement est en outre configurée pour :
transmettre une instruction de commutation forcée représentant le fait que chaque équipement utilisateur desservi par l'équipement DU source doit être commuté vers un équipement DU cible correspondant à l'équipement DU source.

10. Système comprenant un équipement d'unité centralisée, CU (300) selon la revendication 1, et un équipement utilisateur, l'équipement utilisateur (1200) comprenant une circuiterie de traitement (1210, 1220) configurée pour :
recevoir des informations de configuration de commutation à partir d'un équipement d'unité centralisée, CU, les informations de configuration de commutation comprenant un ou plusieurs équipements d'unité distribuée, DU, cibles candidats de l'équipement utilisateur ; et
commuter d'un équipement DU source à un équipement DU cible selon les informations de configuration de commutation.

11. Système selon la revendication 10, dans lequel la circuiterie de traitement est en outre configurée pour :
déterminer l'équipement DU cible facultatif de l'équipement utilisateur selon au moins l'une parmi les informations suivantes : des informations de position de l'équipement utilisateur, des informations de vitesse de l'équipement utilisateur et des informations d'éphémérides d'une pluralité d'équipements DU dans une couverture de service de l'équipement CU ; et
transmettre l'équipement DU cible facultatif de l'équipement utilisateur à l'équipement CU, pour que l'équipement CU détermine l'équipement DU cible candidat de l'équipement utilisateur selon l'équipement DU cible facultatif de l'équipement utilisateur.

12. Système selon la revendication 10, dans lequel la circuiterie de traitement est en outre configurée pour :
après le déclenchement de la commutation, sélectionner un équipement DU cible à partir du ou des équipements DU cibles candidats et synchroniser avec l'équipement DU cible sélectionné ; et
commuter de l'équipement DU source vers l'équipement DU cible.

13. Système selon la revendication 10, dans lequel la circuiterie de traitement est en outre configurée pour :
sélectionner un équipement DU cible à partir du ou des équipements DU cibles candidats et synchroniser avec l'équipement DU cible sélectionné ; et
commuter de l'équipement DU source à l'équipement DU cible après le déclenchement de la commutation.

14. Procédé de communication sans fil réalisé par un équipement d'unité centralisée, CU (300), comprenant :
la génération (S1310) d'informations de configuration de commutation pour un équipement utilisateur afin de commuter d'un équipement d'unité distribuée, DU, source vers un équipement DU cible, les informations de configuration de commutation comprenant un ou plusieurs équipements DU cibles candidats de l'équipement utilisateur ; et
la transmission (S1320) des informations de configuration de commutation à l'équipement utilisateur ; **caractérisé en ce que**
la génération d'informations de configuration de commutation pour l'équipement DU source afin de commuter de l'équipement CU à un équipement CU cible, les informations de configuration de commutation de l'équipement DU source comprenant l'équipement CU cible de l'équipement DU source ; et la transmission des informations de configuration de commutation de l'équipement DU source à l'équipement DU source.
